# EUROPÄISCHE PATENTSCHRIFT

(11) **EP 2 663 742 B1**
(45) Veröffentlichungstag und Bekanntmachung des Hinweises auf die Patenterteilung: **27.06.2018**
(21) Anmeldenummer: 11709323.7
(22) Anmeldetag: 28.01.2011
(51) Int. Cl.: F01K 23/06, F01K 3/18, C05D 9/00, C10L 5/44, C10L 9/08

(54) **VERFAHREN UND ANLAGE ZUR ENERGIERÜCKGEWINNUNG AUS BIOMASSE UND BRENNBAREN ABFÄLLEN, INSBESONDERE NACHWACHSENDEN ROHSTOFFEN SOWIE ZUR KARBONISIERUNG**
METHOD AND SYSTEM FOR THE RECOVERY OF ENERGY FROM BIOMASS AND COMBUSTIBLE WASTE, IN PARTICULAR RENEWABLE RESOURCES, AND FOR CARBONATION
PROCÉDÉ ET INSTALLATION PERMETTANT LA RÉCUPÉRATION D'ÉNERGIE À PARTIR DE LA BIOMASSE ET DES DÉCHETS COMBUSTIBLES, EN PARTICULIER DES MATIÈRES PREMIÈRES RENOUVELABLES, AINSI QUE LEUR CARBONISATION

(30) Priorität: 13.01.2011 DE 202011001453 U
(43) Veröffentlichungstag der Anmeldung: 20.11.2013
(73) Patentinhaber: Gerhard Rieder GmbH, 54518 Platten (DE)
(72) Erfinder: GLADKI, Jan, PL-28-340 Sedziszow (PL)
(74) Vertreter: Müller, Wolfram Hubertus
(86) Internationale Anmeldenummer: PCT/EP2011/000382
(87) Internationale Veröffentlichungsnummer: WO 2012/095119

(56) Entgegenhaltungen:
- WO-A1-94/29410
- WO-A1-99/10682
- WO-A2-2010/121574
- DE-C1- 4 342 165
- US-B1- 6 510 695
- HAUK R ET AL: "CONTHERM - THERMISCHE ABFALLVERWERTUNG IM KRAFTWERK DURCH KRAFTWERKSINTEGRIERTE PYROLYSE VON HEIZWERTREICHEN ERSATZBRENNSTOFFEN//CONTHERM - THERMAL UTILISATION OF WASTE IN A POWER PLANT BY INTEGRATED WASTE PYROLYSIS OF HIGH-CALORIFIC RESIDUAL DERIVATE FU", VGB POWERTECH, VGB POWERTECH, ESSEN, DE, Bd. 84, Nr. 7, 1. Januar 2004 (2004-01-01) , Seiten 66-71, XP001200572, ISSN: 1435-3199

## Beschreibung

Die Erfindung betrifft eine Anlage und ein Verfahren zur Energierückgewinnung aus Biomasse und brennbaren Abfällen, insbesondere aus nachwachsenden Rohstoffen sowie zur Karbonisierung dieser Stoffe. Die Erfindung dient der Gewinnung von Elektro- und Wärmeenergie, von festen Brennstoffen, als Biokohle bezeichnet, sowie von landwirtschaftlich nutzbarem natürlichem Dünger. Sie ist neben der stoffwirtschaftlichen und energetischen Nutzung nachwachsender Rohstoffe auch für die Gewinnung von Biokohle und Energie aus biologischen Abfällen der Lebensmittelindustrie und der industriellen Verarbeitung von Obst und Gemüse, aus sortierten Kommunalabfällen, aus Ablagerungen von Abwasserkläranlagen, aus tierischer Biomasse, so aus Knochenmehl, sowie aus allen anderen festen biologischen Alternativ- und Abfallstoffen geeignet.

Bekannt sind verschiedene Anlagen und Verfahren zur Verarbeitung fester Abfallstoffe, darunter auch von Kommunalabfällen und von Biomasse. Aus dem polnischen Patent PL 102 394 geht eine Anlage hervor, mit der der Holzkohle aus Lignocellulose-Abfällen wie Sägemehl, Sägespänen harter Bäume, Fruchtkernen, Nussschalen u. ä. gewonnen wird. Bei der Anlage handelt es sich um einen Vielzonenofen, der als eine zylindrische Vertikalretorte ausgebildet ist, wobei die Retorte mit Trennwänden in drei Zonen geteilt ist, in eine Schwel-, Glüh- und Kühlzone. Jede dieser drei Zonen hat wiederum mindestens zwei Kammern. Die Trennwände, die sowohl die Zonen als auch die Kammer teilen, sind doppelwandig und miteinander seriell verbunden. Auf diese Weise bilden sie einen Kanal mit einem erzwungenen Umlauf des Heizmediums.

Das polnische Patent PL 179 990 offenbart eine Anlage für die Pyrolyse fester Abfälle, die einen Drehofen aufweist, vor dem sich eine Vorrichtung zum Vorheizen fester Stoffe befindet. Sie ist durch ein dichtes drehbares Zwischenglied mit dem Drehofen verbunden. Die Vorrichtung zum Vorheizen besteht aus einem horizontalen Rohr, in dem ein Transportkanal für feste Abfälle untergebracht ist, der mit einem Sammler gespeist wird. Die Vorrichtung hat zwei Heizzonen, die mit einem Heizmantel ausgestattet sind. In der ersten Zone werden die Abfälle bis zur Temperatur 50°C bis 150°C vorgeheizt. In der zweiten Zone erreicht die Temperatur von 100°C bis 500°C. Nach der Erwärmung speisen die Abfälle im Schwerkraftbetrieb den geneigten Drehofen und bilden in seinem unteren Teil eine Ablagerung, die sich infolge der Umdrehungen in die Richtung der Ofenneigung verschiebt. Im Drehofen werden die Abfälle in der Temperatur 150°C bis 900°C verarbeitet.

Die DE 20 2006 016 U1 beschreibt eine Anlage zur Vergasung von Biomasse mit einem kontinuierlichen Eintrag, anschließender Zerkleinerung und Gasreinigung, wobei in einem Schneckenextruder durch eine Zerfaserungsschnecke durch Zugabe von Wasserdampf und/oder reinem Sauerstoff unter einem Druck von 25 bar bis 30 bar bei Temperaturen von 100°C bis 250°C die Biomasse zersetzt und nach Zuführung von Sauerstoff in einer sich anschließenden Brennkammer bei ca. 900°C die Vergasung erfolgt und das entstehende Gas mittels metallischen Membranfiltern und katalytisch gereinigt wird.

Die DE 10 2008 004 732 A1 offenbart ein Verfahren und eine Vorrichtung zur hydrothermalen Karbonisierung von Biomasse.

Biomasse wird mit Wasser und wenigstens einem Katalysator in einem Druckbehälter durch Temperatur- und/oder Druckerhöhung in Kohle, Öl und/oder dergleichen artverwandte Stoffe umgewandelt wobei in strömungstechnischer Verbindung eine Vorrichtung zur Disorganisation der Biomasse vor und/oder in dem Druckbehälter vorgesehen ist.

Aus DE 10 2008 028 953 A1 geht ein Verfahren zur Erzeugung von Kohle aus Pflanzen und Pflanzenresten mittels hydrothermaler Carbonisierung (HTCI) hervor. Die zerkleinerte und geflutete Biomasse wird unter Zugabe eines Katalysators in einem intermittierend betriebenen Reaktor in einer längeren Reaktionsphase unter Einsatz eines vorgeschalteten und mit dem Reaktor verbundenen Vorwärmbehälter auf einem durchgehend hohen Druckniveau gehalten. Nach Abkühlen der wässrigen Phase werden die Kohlepartikel vom Reaktionswasser getrennt.

Ein Multireaktorverfahren zur thermalen Karbonisierung von Biomasse offenbart DE 10 2008 056 006 A1. Die Biomasse wird nach diesem Verfahren mit Wasser und einem Katalysator in kaskadierbaren Druckbehältern durch Temperatur- und/oder Druckerhöhung in Kohle, Öl und artverwandte Stoffe umgewandelt. Das aus Biomasse, Wasser und Katalysator bestehende und vorgewärmte Füllgut wird in einem Warmhaltevorgang so gesteuert, dass diese Komponenten miteinander reagieren und anschließend die Reaktionsprodukte aus dem Reaktor entnommen.

Aus PL 204 294 geht eine Anlage zur autothermischen Karbonisierung von Biomasse und festen Abfallbrennstoffen hervor, insbesondere zur Produktion von Aktivkohle, Energie und Gasen.

Die Anlage besteht aus Behältern für die Biomasse und die Abfallbrennstoffe, aus Vorrichtungen zum Zerkleinern und zur Segregation der Einsatzstoffe, aus Vorratsbehältern für die frische Einsatzmischung, aus einem horizontal gelagerten Reaktor mit einer darin horizontal angeordneten zylindrischen Retorte, die einen Schneckenzubringer aufweist und an einem Ende mit dem Vorratsbehälter für die frische Mischung verbunden ist und am anderen Ende in einem vertikal angeordneten dichten Behälter für die Aufnahme des festen Reaktionsproduktes übergeht. Im horizontal gelagerten Reaktor sind ein Brenner und ein Ventilator angeordnet. Die horizontale Retorte weist zum oberen Teil der Verbrennungskammer des Reaktors über ihre gesamte Länge Öffnungen für den Austritt des während der Erwärmung entstehenden Gasgemisches auf. Dieses Gasgemisch wird mit einem Unterschuss aus Luft verbrannt. Das aus dem Reaktor austretende Brenngas und das sich in der vertikal angeordneten Retorte sammelnde Gas können nachfolgend für industrielle Verfahren unter Einsatz von Waschtürmen zur Reinigung der Gase genutzt werden.

Die Anlagen nach dem Stand der Technik gewährleisten zum Teil nur einen chargenweisen Betrieb. Kontinuierlich arbeitende Anlagen haben den Nachteil, dass die Verkohlung der Biomasse eine relativ lange Verweilzeit in der Reaktionszone des Reaktors erfordert oder sie nach dem Prinzip der hydrothermalen Karbonisierung unter Einsatz von Katalysatoren arbeiten. Dies vermindert nicht nur die Effizienz der gesamten Anlage, sondern hat auch die Notwendigkeit einer intensiven Kühlung des Endproduktes, der Kohle, zur Folge. Hinzu kommt ein verhältnismäßig hoher Flächenbedarf der einzelnen Baugruppen der Gesamtanlage.

Aus WO 2010/121574 A2 geht eine Anlage zur Energierückgewinnung aus Biomasse umfassend eine Förderanlage zum Transport der Biomasse in eine Trocknungsanlage, die mit einem Reaktor verbunden ist. Die Anlage weist einen geschlossenen ORC-Kreislauf mit mehreren Wärmetauschern auf, wobei im ORC-Kreislauf eine Turbine einen Generator antreibt und eine Anschlussstelle die erzeugte elektrische Energie Abnehmern zur Verfügung stellt. Außerdem wird Abnehmern Wärme zur Verfügung gestellt.
Die Anlage lässt hinsichtlich der Energierückgewinnung aus Biomasse einen Fortschritt erkennen. Sie ist jedoch nur für Biomasse ausgelegt und für die energetische und stoffliche Verwertung weiterer brennbarer Stoffe nicht geeignet. Insofern ist das Anwendungsgebiet dieser Erfindung erheblich eingeschränkt.

Insgesamt weisen die Anlagen nach dem Stand der Technik jedoch eine zu geringe Energieeffizienz auf.

Aufgabe der Erfindung ist es daher eine Anlage und ein Verfahren zur Energierückgewinnung aus Biomasse und aus brennbaren Abfällen sowie zu deren stofflichen Verwertung bereitzustellen, die im kontinuierlichen Betrieb eine höhere Energieeffizienz ermöglichen.

Erfindungsgemäß wird die Aufgabe durch eine Anlage zur Energierückgewinnung aus Biomasse und brennbaren Abfällen und zur Karbonisierung dieser Stoffe gelöst, umfassend eine Trenn-, Zerkleinerungs- und/oder Siebvorrichtung, die mit einer Förderanlage zum Transport der Biomasse in eine Trocknungsanlage verbunden ist, einem mit dieser Trocknungsanlage verbundenen Reaktor, an dem eine Gas- oder Ölinstallation mit einem Gebläse angeordnet ist sowie Wärmetauschern und Einrichtungen zum Kühlen und Reinigen von Abgasgasen, wobei
a) der Reaktor mit einem Kühler verbunden ist, der das aus dem Reaktor stammende Produkt der Karbonisierung aufnimmt und der mit einer Fördereinrichtung verbunden ist, die das Karbonisierungsprodukt zu einer Löschvorrichtung, danach zu einer Befeuchtungsvorrichtung und anschließend zu einer Packvorrichtung transportiert, die das Produkt, eine Biokohle, konfektioniert
   oder
b) der Reaktor mit einer Fördereinrichtung verbunden ist, die das durch die Karbonisierung im Reaktor entstehende Verkohlungsprodukt zu einer Veraschungsvorrichtung transportiert und die Veraschungsvorrichtung mit einem Kühler und dieser mit der Fördereinrichtung verbunden ist, die das Veraschungsprodukt zu einer Packeinrichtung transportiert, die es in geeigneten Behältnissen konfektioniert,
und die Anlage zum Zweck der Energierückgewinnung
bei **a)** ein geschlossenes Produktionswasserumlaufsystem aufweist, umfassend
- einen Wärmetauscher zur Kühlung der mittels einer Rohrleitung zugeführten heißen Abgase der Trocknungsanlage und gleichzeitigen Wärmeübertragung auf das von diesem Wärmetauscher zum Verdampfer zugeführte Produktionswaser, wobei der Verdampfer durch die über eine Rohrleitung aus dem Reaktor zugeführten heißen Abgasgase umströmt wird und mit einer Turbine verbunden ist, die einen Generator antreibt und mittels einer Anschlussstelle die erzeugte elektrische Energie Abnehmern zur Verfügung stellt;
- einen Wärmetauscher zur Übertragung der Wärme des aus der Turbine zugeführten heißen Kondensates an das über ein offenes System zugeführte Wasser zur weiteren wirtschaftlichen Nutzung des erwärmten Wassers an die Abnehmer;
- einen mit dem Wärmetauscher zur Übertragung der Wärme des aus der Turbine zugeführten heißen Kondensates verbundenen weiteren Wärmetauscher zur Übertragung der vorhandenen Restwärme auf das durch ein offenes System mittels eines Anschlusses zugeführte Rohwasser, das aufgeheizt mittels eines Anschlusses Abnehmern zur weiteren Nutzung zur Verfügung steht;
und
bei **b)** ein geschlossenes Produktionswasserumlaufsystem aufweist, umfassend
- einen Wärmetauscher zur Kühlung der mittels einer Rohrleitung zugeführten heißen Abgase der Trocknungsanlage und gleichzeitigen Wärmeübertragung auf das von diesem Wärmetauscher zu einem weiteren Wärmetauscher zugeführte Produktionswasser zur Aufnahme der Wärme der in der Veraschungsvorrichtung anfallenden heißen Abgasgase und wobei letzterer Wärmetauscher mit dem Verdampfer verbunden ist, der Verdampfer von den mittels einer Rohrleitung zugeführten heißen Abgasgase des Reaktors umströmt und mit dem Turbogenerator verbunden ist und eine Anschlussstelle die erzeugte elektrische Energie Abnehmern zur Verfügung stellt;
- einen Wärmetauscher zur Übertragung der Wärme des aus dem Turbogenerator zugeführten heißen Kondensates an das über ein offenes System zugeführte Wasser zur weiteren wirtschaftlichen Nutzung des erwärmten Wassers an die Abnehmer;
- einen als Wärmetauscher fungierenden Kühler zur Übertragung der Wärme des heißen Veraschungsproduktes auf das über einen Anschluss zugeführte Rohwasser, wobei der Kühler mit einer Rohrleitung vor dem Eingang in den Wärmetauscher verbunden ist, der die aus der Trocknungsanlage strömenden heißen Abgasgase kühlt;
- einen mit dem Wärmetauscher zur Übertragung der Wärme des aus dem Turbogenerator zugeführten heißen Kondensates verbundenen weiteren Wärmetauscher zur Übertragung der vorhandenen Restwärme auf das durch ein offenes System mittels eines Anschlusses zugeführte Wasser, das aufgeheizt mittels eines Anschlusses Abnehmern zur weiteren Nutzung zur Verfügung steht.

Gemäß einer bevorzugten Ausführungsform der erfindungsgemäßen Anlage ist die Verbindung zwischen der Trocknungsanlage und dem Reaktor durch eine an der Trocknungsanlage angeordnete vertikale Leitungsröhre hergestellt ist, die in ihrem unteren Teil eine Dosierkammer aufweist.

Eine weitere Ausführungsform sieht vor, dass der Dampferzeuger innerhalb der Trocknungsanlage als Rohrverdampfer angeordnet und schneckenförmig ausgebildet ist.

Gemäß einer bevorzugten Ausführungsform weist der das Kondensat aus der Turbine aufnehmende Wärmetauscher eine Anschlussstelle für die Einspeisung der gewonnenen Wärmeenergie in das öffentliche Heizungsnetz, für die Nutzung der Wärmeenergie für Kühlzwecke und/oder für Trocknungszwecke.

Nach einer weiteren Ausführungsform ist der das Kondensat aus der Turbine aufnehmende Wärmetauscher mittels eines Anschlusses mit einer Trocknungsvorrichtung verbunden ist, die die Biomasse unter Nutzung der in diesem Wärmetauscher anfallenden Wärmeenergie trocknet.

Besonders bevorzugte Ausführungsformen der Erfindung sehen vor, die Vorrichtungen und Einrichtungen der Anlage in einer jeweils kompakt ausgeführten Biomasse-Halle und einer Maschinenhalle, die eine Trennwand unmittelbar miteinander verbindet, anzuordnen oder die kompakte Anlage in Gestalt einer transportablen Containerausführung vorzusehen.

Erfindungsgemäß wird die Energierückgewinnung aus Biomasse und brennbaren Abfällen und die Karbonisierung dieser Stoffe durch ein Verfahren gelöst, bei dem die Biomasse und die Abfälle zerkleinert und getrocknet kontinuierlich einem aufgeheizten Reaktor zugeführt werden und in diesem nach Stabilisierung der für die Karbonisierung erforderlichen Temperatur und nach Stabilisierung der Temperatur der Abgasgase des Reaktors sauerstofffrei und autotherm verkohlt und die dabei entstehenden Abgasgase gekühlt und gereinigt werden und das heiße Verkohlungsprodukt entweder
a) gekühlt und nach einer aus Sicherheitsgründen erfolgten Behandlung mit CO₂ mit Wasser befeuchtet und schließlich in einer Packvorrichtung als Biokohle konfektioniert wird,
   oder
b) einer Veraschungsvorrichtung zugeführt, in dieser vollständig verbrannt, die dabei entstehende Asche anschließend gekühlt und danach einer Packvorrichtung zugeführt wird, in der die Asche für Düngerzwecke oder zum Zweck der Bodenverbesserung für Abnehmer konfektioniert wird,
und zum Zweck der Energierückgewinnung
bei a)
- die heißen Abgasgase aus dem Reaktor zur Trocknung der für die Karbonisierung vorgesehenen und zerkleinerten Biomasse und Abfälle im Gegenstrom genutzt und danach durch eine Wärmetauscher geführt werden und in diesem das in einem geschlossenen Produktionswasserumlaufsystem zugeführte Wasser weiter erhitzen, dieses einem Dampferzeuger zugeführt wird und in diesem durch die heißen Abgasgase des Reaktors in Hockdruckdampf umgewandelt wird, mit dem zur Erzeugung elektrischer Energie eine Turbine eines Generators angetrieben und die erzeugte elektrische Energie Abnehmern bereitgestellt wird,
- die Wärmeenergie des aus der Turbine strömenden heißen Kondensates mittels eines Wärmetauschers auf das über ein externes System zugeführte Wasser übertragen und Abnehmern für Heiz-, Trocknungs- und Kühlzwecke zur Verfügung gestellt wird und
- die Restwärme des aus dem letztgenannten Wärmetauscher strömenden Produktionswassers durch einen weiteren Wärmetauscher auf zugeführtes Rohwasser übertragen und dem Unternehmen, in dem die erfindungsgemäße Anlage installiert ist, für soziale Zwecke zur Verfügung gestellt wird;
und bei b)
- die heißen Abgasgase aus dem Reaktor zur Trocknung der für die Karbonisierung vorgesehenen und zerkleinerten Biomasse und Abfälle im Gegenstrom genutzt und danach durch einen Wärmetauscher geführt werden und in diesem das in einem geschlossenen Produktionswasserumlaufsystem zugeführte Wasser weiter erhitzt wird bevor es in einem weiteren Wärmetauscher die Wärmeenergie der aus einer Veraschungsvorrichtung strömenden heißen Abgasgase aufnimmt und das so erhitzte Produktionswasser einem Dampferzeuger zugeführt und in diesem durch die heißen Abgasgase des Reaktors in Hockdruckdampf umgewandelt und damit ein Turbogenerator angetrieben und die so erzeugte elektrische Energie Abnehmern bereitgestellt wird;
- die Wärmeenergie des aus dem Turbogenerator strömenden heißen Kondensates mittels eines Wärmetauschers auf das über ein externes System zugeführte Wasser übertragen und Abnehmern für Heiz-, Trocknungs- und Kühlzwecke zur Verfügung gestellt wird und
- die Restwärme des aus letzterem Wärmetauscher strömenden Produktionswassers durch einen weiteren Wärmetauscher auf zugeführtes Rohwasser übertragen und dem Unternehmen, in dem die erfindungsgemäße Anlage installiert ist, für soziale Zwecke zur Verfügung gestellt wird.

Eine Ausführungsform des Verfahrens sieht vor, dass die Biomasse und die brennbaren Abfälle auf eine bis zu 15 mm x 15 mm x 40 mm zerkleinert werden.

Gemäß einer weiteren Ausführung wird die autotherme Karbonisierung in Abhängigkeit von der Art der Biomasse und der brennbaren Abfälle erst nach der Stabilisierung der Temperatur im Reaktor und die der Abgasgase zwischen 650° C und 850°C eingeleitet.

Nach einer bevorzugten Ausführungsform werden die getrocknete Biomasse und die Abfälle mit einer Temperatur zwischen 80°C und 100°C in den Reaktor eingebracht.

Weitere Ausführungsformen der Erfindung sehen vor, dass die Biomasse und die Abfälle bei einer Verweildauer in einer Trocknungsanlage von 0,5 Minuten bis 3 Minuten getrocknet und bei einer Verweildauer von durchschnittlich 3,4 Sekunden im Reaktor karbonisiert werden.

Bevorzugt wird das Karbonisierungsprodukt bis auf eine Temperatur <50°C, vorzugsweise <40°C abgekühlt.

Eine besonders bevorzugte Ausführungsform des erfindungsgemäßen Verfahrens umfasst die Biomasse nachwachsende Rohstoffe, biologische Abfälle der Lebensmittelindustrie und der industriellen Verarbeitung von Obst und Gemüse, sortierte Kommunalabfälle, Ablagerungen von Abwasserkläranlagen, tierische Biomasse, Knochenmehl sowie alle anderen festen biologische Alternativ- und Abfallstoffe.

Der besondere Vorzug der erfindungsgemäßen Anlage und des erfindungsgemäßen Verfahrens besteht darin, dass aus Biomasse und brennbaren Abfällen unterschiedlichster Art in einem autothermen und kontinuierlichem Prozess ohne Einsatz von Katalysatoren und Wasser mit hoher Effizienz Wärme- und Elektroenergie gewonnen und Biokohle oder alternativ neben der Energiegewinnung als Dünger oder zur Bodenverbesserung einsetzbare Asche hergestellt werden können.
Die Erfindung ermöglicht darüber hinaus eine Bauweise, die nur einen geringen Platzbedarf erfordert. In einer transportablen Variante, z. B. zur Karbonisierung kleinerer, in der Beschaffung lokal und zeitlich ungleichmäßiger Mengen von Biomasse und brennbaren Abfallstoffen, kann die Anlage auch auf fahrbaren Plattformen angeordnet sein.

Die erfindungsgemäße Anlage zur Energierückgewinnung mit integrierter Herstellung von Biokohle und als Dünger einsetzbarer Asche besteht aus einer Biomasse-Halle und aus einer anliegenden Maschinenhalle, beide mit einer unveränderlichen, reproduzierbaren Konstruktion, fixen Maßen und gleicher Farbabstimmung. In der Biomasse-Halle befinden sich Anlagen zur Trennung der Biomasse, die mit vertikalen und horizontalen Fördereinrichtungen fest verbunden sind sowie Anlagen zur Zerkleinerung von Biomassearten größerer Abmessungen sowie Siebanlagen.
Die Förderer transportieren die Biomasse zur Trocknungsanlage, die mit dem Reaktor verbunden ist und an dessen Ausgang für das Karbonisierungsprodukt eine Kühlanlage installiert ist. Aufbau und Arbeitsweise des Reaktors sind in dem Patent PL 204 294 beschrieben. Der Reaktor ist mit einem Dampferzeuger verbunden, der eine fest angeschlossene Turbine mit einem StromGenerator betreibt und die bei der Karbonisierung entstehende Abfall-Wärmeenergie nutzt. Es besitzt außerdem Rohrleitungsanschlüsse, die es ermöglichen, die entstandene Wärmeenergie an die externen Abnehmer zu leiten.

Der Reaktor ist mit einer mit Gas oder Öl betriebenen Aufheizanlage, die der Zündung der pyrolytischen Gase einen Anstoß gibt, mit einer Lufteintrittsöffnung, durch die die Luft tangential zur inneren Wand des Reaktors strömt sowie mit nicht weniger als zwei Retorten ausgestattet.

Die Aufheizanlage des Reaktors dient dazu, dem autothermischen Prozess der Karbonisierung der Biomasse einen Anstoß zu geben. Diese Anlage besteht aus einem Öl- oder Gasbrenner mit der dazu erforderlicher Installation, aus einer zylindrischen Verbrennungskammer aus Metall mit ihrer zylindrischen Metallverkleidung, in deren Innerem die durch einen Ventilator eingeblasene Luft strömt. Die durchströmende Luft erwärmt sich in der Kammer, die die zylindrische Metallverkleidung bildet. Die Luft nimmt die Wärme von dem zylindrischen Gehäuse der Verbrennungskammer des Öl- oder Gasbrenners auf. Die erhitzte Luft mischt sich mit den Abgasen des Öl- oder Gasbrenners, gelangt tangential zur Innenwand des Reaktors und versetzt die heiße Luftmischung in eine Zirkulationsbewegung. Die Mischung umfließt die Retorten und die innere Keramikwand des Reaktors und bewegt sich gleichzeitig zum hinteren Teil des Reaktors.

Der Reaktor hat die Form eines zylindrischen keramischen Tunnels, der die Rolle einer Wärmebatterie für den autothermischen Prozess der Verbrennung der pyrolytischen Gase darstellt und eine autothermische Karbonisierung der Biomasse gewährleistet. Der zylindrische keramische Tunnel steht auf einem festen Fundament oder ist fest auf einer beweglichen Plattform montiert. Seine runden Wände sind von außen mit einer thermischen Isolation umlegt und mit einem beliebigem festen Gehäuse, vorzugsweise aus Stahlblech, verkleidet. Als thermische Isolation eignet sich für die Bedürfnisse der Erfindung Isolationswolle.

Im Inneren des Reaktors sind entlang seiner Längsachse nicht weniger als zwei einseitig geschlossene Retorten fest angebracht. Ihre Querschnittsform hängt von der in ihnen installierten Fördereinrichtung der zu verkohlenden Biomasse ab. Im Inneren jeder Retorte ist eine beliebige Fördereinrichtung mit einer zeitlich beliebig regulierbaren Verschiebung der in der Retorte zu verkohlenden Biomasse angeordnet. Für die Bedürfnisse der Erfindung eignet sich am besten ein Schneckenzubringer mit verstellbarer Drehzahl. Die Schnecke des Zubringers und die Retorte sollen aus hitzebeständigem Stahl hergestellt sein. Jede Retorte ist von oben mit einer in ihrer Form der Fördereinrichtung angepassten Abdeckung versehen. Längs der Abdeckung sind zum Reaktorinneren kegelförmige Durchgangsöffnungen angebracht, deren Durchmesser sich von der Innen- zur Außenseite der Retortenabdeckung vergrößert. Die Summe der Querschnittsflächen dieser Öffnungen, gemessen an dem Durchmesser an der Innenseite der Retortenabdeckung, ist nicht kleiner als die Querschnittfläche der Retorte. Der Durchmesser dieser Öffnungen hängt eng mit der Granulierung der zu verkohlenden Biomasse zusammen und ist proportional zu dieser Granulierung. Die einseitig geschlossenen Retorten sind auf mehreren Grundstöcken angebracht, die am keramischen Boden des Reaktors befestigt sind. Die Höhe dieser Grundstöcke ist abhängig von der im Inneren des Reaktors montierten Anzahl von Retorten. Die ist so angepasst, dass die Summe der Längsachsen der Retorten übereinstimmt mit der Länge der zentralen Achse des inneren Reaktorzylinders. Die Retorten sind im Reaktorinneren so untergebracht, dass von der Seite des oberen Dosierens der Biomasse in die Retorte, in der Nähe der vertikalen Wand, die den zylindrischen, keramischen Reaktortunnel schließt, ein Anfangsteil der Einrichtung untergebracht ist, die die zu verkohlende Biomasse den Retorten zuführt. Auf der gegenüber liegenden Seite des zylindrischen, keramischen Reaktortunnels sind die Retorten in der vorderen Frontwand des Reaktors montiert und ragen teilweise aus dieser Wand auf einer Länge heraus, die gewährleistet, dass das Karbonisierungsprodukt aus ihnen vollständig entsorgt werden kann. Die Endstücke der Retorten bilden fest montierte Antriebe der Fördereinrichtung, die die Biomasse und die Karbonisierungsprodukte im Inneren jeder Retorte transportieren.
Die Biomasse und die Karbonisierungsprodukte werden im Inneren jeder Retorte im Gegenstrom zur Bewegung der zirkulierenden Luft und der sich im Reaktor verbrennenden pyrolytischen Gase bewegt.

Am oberen Teil des Reaktors ist eine Trocknungsanlage für die zu karbonisierende Biomasse zusammen mit einem Dampferzeuger fest montiert. Die Trockenanlage ist in Förderrichtung der zu transportierenden und zu trocknenden Biomasse zur hinteren Wand des Reaktors geneigt. Der Neigungswinkel soll vorzugsweise nicht kleiner als 7 Grad betragen. Die Trocknungsanlage für die Biomasse ist in ihrem vorderen oberen Teil, vor ihrer dichten Frontwand mit einem Einfülltrichter für zu trocknende Biomasse ausgestattet. Der hintere untere Teil der Trocknungsanlage ist mit dem Reaktor durch ein dichtes Trichterrohr fest verbunden, durch das die Biomasse auf die in den Retorten montierte Fördereinrichtung geschüttet wird.
Die Trocknungsanlage bildet ein drehbares Metallrohr, an dessen innerer Wand ein Schneckenband befestigt ist, dessen Hub dem Innendurchmesser des Rohrs gleicht. Das für die zu trocknende Biomasse in der Trocknungsanlage fest angeordnete Schneckenband ist vorzugsweise ein Schneckenförderer, der entlang des Drehrohres der Trocknungsanlage fördert. Der vordere Teil des Drehrohrs ist fest in einem Drehlager, vorzugsweise einem Ring-Tonnenlager, angeordnet, das wiederum in der Frontwand der Trocknungsanlage montiert ist. An der Außenseite des Lagers und der Trocknungsanlage ist der Antrieb dieser Anlage, vorzugsweise ein Kettenantrieb, vorgesehen. Der hintere Teil des Drehrohres ist fest in einem Drehgleitlager untergebracht, das in der hinteren Wand der Trocknungsanlage montiert ist. Das Drehgleitlager ermöglicht sowohl die Längs- als auch Drehverlagerung des Metallrohrs der Trocknungsanlage. Die Drehungen der Trocknungsanlage sind so angepasst, dass sich die zu trocknende Biomasse entgegen der Strömungsrichtung der Abgasgase bewegt.

Die Verweilzeit der Biomasse in der Trocknungsanlage hängt von dessen Feuchtigkeitsgehalt ab. Der Drehschneckenförderer der Trocknungsanlage reicht in seinem unteren Teil in eine Einfüllkammer aus hitzebeständigem Stahl mit einer vertikal angeordneten Leitungsröhre beliebigen Durchmessers für die getrocknete Biomasse. Die Einfüllkammer ist sowohl am Gehäuse der Trocknungsanlage als auch an der vertikalen Leitungsröhre für die getrocknete Biomasse befestigt. Die zu karbonisierende getrocknete Biomasse gelangt durch Ausschnitte im Drehrohr der Trocknungsanlage in die vertikale Leitungsröhre. In ihrem unteren Teil ist die vertikale Leitungsröhre mit einer entsprechend geformten Dosierkammer aus hitzebeständigem Material abgeschlossen. In der Kammer sind die vorderen Teile der Reaktorretorten mit Einfüllöffnungen montiert, dank denen die getrocknete Biomasse zu den Schneckenförderern jeder Retorte gefördert werden kann. Die Dosierkammer dosiert ununterbrochen die getrocknete Biomasse zu den jeweils im Reaktorinneren montierten Retorten.

Die Trocknungsanlage ist mit einem Dampferzeuger verbunden, den ein schneckenförmiges hochdruck- und hochtemperaturbeständiges Rohr bildet. Der Rohrverdampfer erzeugt einen Hochdruckdampf. Das Wasser fließt durch das schneckenförmige Rohr im Gleichstrom mit den Abgasen des Reaktors. Der erzeugte Hochdruckdampf gelangt zur Dampfrohrleitung, durch die er über Entlüftungs- und Abschaltventile zur weiteren Nutzung geleitet wird. Für die Bedürfnisse der Erfindung speist der Hochdruckdampf über einen Auslaufstutzen mit Sicherheitsventil die Turbine eines StromGenerators.

Am Vorderteil des Reaktors ist ein dichter Kühler für das heiße Produkt vorgesehen. Der Kühler ist vorn mit einem Einfülltrichter an den Schneckenförderer des Reaktors angeschlossenen. Er kühlt das heiße Karbonisierungsprodukt mit Wasser, vorzugsweise nach dem Gegenstromprinzip. Der Kühler für das Karbonisierungsprodukt weist eine zylindrische Kammer, vorzugsweise ein doppelwandiges Rohr auf, durch das zwischen der Innen- und Außenwand in Gegenrichtung zum geförderten heißen Karbonisierungsprodukt das Produktionswasser fließt. Für die Bedürfnisse der Erfindung weist der Kühler für das Karbonisierungsprodukt einen Drehschneckenförderer auf. Er wird entlang seiner Länge mit dem im Gegenstrom durchfließenden Wasser gekühlt. Im Inneren der zylindrischen Kammer des Kühlers, der mit einer Außenwand umgeben ist, ist die Schnecke des Förderers angeordnet. Die Außenwand der zylindrischen Kammer des Kühlers bildet einen Metallaußenmantel. Die Innenwand des doppelwandigen Rohres bildet das Gehäuse für die Kammer des Schneckenförderers. an seinem Vorderteil besitzt der Schneckenförderer einen fest montierten Elektromotor mit Getriebe, vorzugsweise auch mit einem Wechselrichter. Die Kammer des Kühlers ist fest mit dem unteren Teil des Einfülltrichters für das heiße Karbonisierungsprodukt verbunden, das zum Schneckenförderer des Kühlers gelangt. Die Kammer des Schneckenförderers wird mit Produktionswasser gekühlt, das im zylindrischen Raum fließt, den das Gehäuse des Schneckenförderers und der Metallaußenmantel bilden. Das Wasser fließt in Gegenrichtung zu dem mittels des Schneckenförderers transportierten Karbonisierungsproduktes. Das Gehäuse der Kammer des Förderers und der Außenmantel sowie die seitlichen Abdeckungen des zylindrischen Raumes des doppelwandigen Kühlerrohrs sind aus temperatur- und druckbeständigen Kesselmaterialien gefertigt.

Das vorzugsweise bis zur Temperatur von weniger als 40°C abgekühlte Karbonisierungsprodukt wird durch ein Einfüllrohr zu einer weiteren fest montierten Fördereinrichtung beliebiger Art geleitet. Am geeignetsten ist hierfür ein Telleraufgeber, ausgestattet mit einer Kammer, in der eine Auflockerung des Produkts erfolgt. Es ist vorteilhaft, dass diese Kammer mit CO₂ gefüllt ist, um eventuelle Funken zu löschen. Das gekühlte und erloschene Produkt ist ein hochwertiger Brennstoff, der anschließend zu einer Packvorrichtung transportiert wird und von dieser in Big Bag Behältern konfektioniert werden kann.

Für den unmittelbaren Prozess der Karbonisierung drückt ein Gebläse Luft in die Aufheizanlage, in der die Vermischung der Luft mit den heißen Abgasen des Ölbeziehungsweise Gasbrenners erfolgt. Die Vermischung erfolgt nur während der Aufheizung. Nachdem sich die für die Karbonisierung im Reaktor erforderliche Temperatur, die Temperatur der Abgasgase, die den Reaktor verlassen, und die Temperatur der in den Kühler geleiteten Abgasgase sich stabilisieren, erfolgt die Abschaltung des Öl- beziehungsweise Gasbrenners und die Schließung des Zuflusses heißer Abgasgase in die Aufheizanlage. Die im Reaktor nicht vollständig verbrannten Abgasgase fließen durch eine vertikale Öffnung in den hinteren Teil der Trocknungsanlage tangential zu seiner zylindrischen Innenwand. In diesen Raum wird erforderlichenfalls Zweitluft hinein gedrückt, um die den Reaktor verlassenden Abgasgase vollständig zu verbrennen. Die sich am Ende des Verbrennungsprozess ergebenden heißen Abgase gelangen strömend in einer Wirbelbewegung zu dem vorderen Teil der Trocknungsanlage. Dabei erwärmen sie das Drehrohr der Trocknungsanlage für die Biomasse und trocknen dadurch die in seinem Inneren befindlichen, sich in Gegenrichtung zum Strom der Verbrennungsgase bewegende und zu karbonisierende Biomasse. Danach gelangen die Abgase durch die im vorderen Teil der Trocknungsanlage vorhandene Öffnung zum Austauscher Wasser/Abgase und anschließend werden sie durch ein Gebläse über die Abgasleitung zur Reinigung und dann zum Schornstein geleitet.

Zur Energierückgewinnung verfügt die erfindungsgemäße Anlage über drei Produktionswassersysteme.
Beim ersten geschlossenen System drückt eine Umlaufwasserpumpe unter dem Druck von 2,0 MPa das Wasser in die Leitung zum Austauscher Wasser/Abgase hinein, wo die Erwärmung erfolgt. Aus dem Austauscher fließt das Wasser zu dem im Inneren des Abgaskühlers installierten Dampferzeuger in/oder zur Reduktionsturbine mit dem StromGenerator. Das Kondensat wird anschließend zum Austauscher Heißwasser/Wasser und dann zum Rohraustauscher, wo der Wassermangel mit Rohwasser ergänzt wird. Die Ergänzungspumpe schöpft das gekühlte Produktionswasser und das Rohwasser über die Umlaufpumpe zurück in die Speisewasserinstallation.
Im zweiten offenen Produktionswassersystem wird kaltes Wasser über die Speisewasserleitung zum Austauscher weitergeleitet. Im Inneren dieses Austauschers ist ein Rohraustauscher installiert, der das Wasser mit dem heißen Wasser aus dem ersten System erwärmt. Das so erhitzte Wasser ist für soziale Zwecke des Betriebs: Zentralheizung und Warmwasserboiler vorgesehen.
Ein weiteres gesondertes System bildet die Installation zur Kühlung der Biokohle. Kaltes Wasser aus der Speisewasserleitung wird zum Förderer des Produktes - der Biokohle - geleitet und gelangt in den Raum zwischen der Innen- und Außenwand der zylindrischen Kammer des Produktkühlers. Nachdem das auf die Temperatur von 70°C erwärmte Wasser den Kühler verlassen hat, wird es zur Berieselung des Produkts - der Biokohle - genutzt.

Der Betrieb zur Energierückgewinnung ist ein Thermolyse-Werk, in dem kontinuierlich einige Produkte hergestellt werden: ein veredelter fester Brennstoff mit geregeltem Heizwert und/oder erneuerbare Elektroenergie und/oder Wärmeenergie und/oder heiße Abgase aus Abfallbrennstoffen aus verschiedenen Quellen: aus festen biodegradierbaren Überresten der Lebensmittelindustrie und der industriellen Verarbeitung von Obst und Gemüse, aus sortierten Kommunalabfällen, aus kommunalen Ablagerungen von Abwasserkläranlagen, aus tierischer Biomasse, darunter auch aus Fleischknochenmehl, aus pflanzlicher Biomasse, darunter auch von Plantagen der Energiepflanzen sowie aus allen anderen festen biodegradierbaren Alternativ- und Abfallbrennstoffen. Die Vorbereitung der Abfallbrennstoffe durch Verarbeitung in dem Thermolyse-Betrieb für Energierückgewinnung besteht in einer Zerkleinerung in Körner, derer Größe die Maße 15x15x40 mm nicht überschreiten sollen. Ein so vorbereiteter Brennstoff wird mechanisch in den Einfülltrichter der Drehtrockenanlage transportiert. Die im unteren Teil des Einfülltrichters montierte Drehschnecke der Trockenanlage transportiert den Abfallbrennstoff entlang der zylindrischen Metallkammer, die ein schneckenförmiges Rohr bildet, und durch die in einer Gegenrichtung zum sich verlagernden Abfallbrennstoff sich die Abgasgase bewegen, die den Reaktor verlassen. Die Biomasse bleibt in der Trockenanlage 0.5 Minuten bis 2 Minuten. Die getrocknete und bis zur Temperatur von ca. 90°C erwärmte Biomasse wird über eine vertikale Röhre zum Förderer der Reaktorretorte geleitet. Auf der gegenüberliegenden Seite der Einfüllanlage des Retortenförderers wird durch die tangential zur Innenwand der Reaktorkammer angebrachte Öffnung die Luft hineingeführt, mit der die Abgase verbrannt werden, die aus dem Reaktor während einer sauerstofffreien Verkohlung des Abfallbrennstoffs entweichen. Die Flamme der brennenden Gase bildet einen länglichen Wirbelring in den Retorten, in deren Inneren sich die zu verarbeitenden und sich verschiebenden Abfälle befinden. Die erforderlichen technischen Parameter des in dem Thermolysemodul der Energierückgewinnung herzustellenden Brennstoffs werden durch Einstellung einer entsprechenden Drehgeschwindigkeit des Schneckenförderers im Inneren jeder Retorte erzielt. Die zur Erzeugung des Produktes erforderliche Zeit für den Durchfluss des Abfallbrennstoffes hängt von der Temperatur des Verkohlungsprozesses im Reaktor und von der Biomassenart ab. Der eine Temperatur von 200°C bis 370°C aufweisende heiße Brennstoff mit gegebenen technischen Parametern wird aus dem Reaktor mit dem Schneckenförderer weitertransportiert, der gleichzeitig die Kühlanlage für das Endprodukt ist. Die Kühlanlage verringert die Temperatur des Produktes bis auf weniger als 40°C. Durch den Schneckenförderer der Kühlanlage wird der abgekühlte Brennstoff mit gegebenen technischen Parametern zum Behälter für das Produkt transportiert, der einen integralen Teil des Thermolysemoduls der Energierückgewinnung darstellt.

Im Schneckenförderer wird das Produkt mit dem Produktionswasser gekühlt, das in dem Raum zwischen den Rohrwänden entlang des Förderers in der Gegenrichtung zum durch den Förderer transportierten Produkt durchfließt. Die Nebenprodukte des Prozesses der Brennstoffherstellung im Thermolysemodul der Energierückgewinnung sind: heißes Produktionswasser, Wasserheißdampf und Abgase je nach verarbeiteter Brennstoffart. Die im Prozess entstehenden Abgase werden nach der Reinigung an die Atmosphäre freigesetzt.

Der besondere Vorzug des Thermolysemoduls der Energierückgewinnung gemäß der Erfindung ist die Möglichkeit der Verarbeitung beliebiger biodegradierbarer Kommunalabfälle und/oder Industrieabfälle und/oder pflanzlicher Biomassen und/oder tierischer Biomassen zum vollwertigen Produkt mit über 65%-em Gehalt an Kohlenstoff C und hohen Nutzparametem, dessen Wert beliebig regulierbar ist je nach individuellen Anforderungen der Abnehmer des Produktes. Ein anderer Vorteil ist eine hohe Effizienz des Thermolysemoduls, die aus der Kontinuität des Herstellungsprozesses sowie aus dem vorhandenen Verfahren der Trocknung und Thermolyse in Gegenströmung resultiert. Zu den Vorteilen gehört auch die volle Nutzung der im Thermolysemodul infolge des Herstellungsprozesses vollwertiger Brennstoffe entstandenen Wärmeenergie sowie der Energie der Abfallprodukte des Verbrennungsprozesses. Außer einem vollwertigen Brennstoff produziert der Thermolyse-Bertieb für Energierückgewinnung die "grüne" Elektroenergie und eine erneuerbare Wärmeenergie. Wird der Thermolyse-Betrieb für die Energierückgewinnung unter dem Gesichtspunkt der Nutzung wesentlicher Mengen biodegradierbarer Abfallbrennstoffe eingerichtet, besteht die Möglichkeit der Herstellung der "grünen" Elektroenergie mit bestimmter Leistung sowie einer erneuerbaren Wärmeenergie mit proportionaler Leistung und/oder Kälte von lokaler industrieller Bedeutung.

Ein wesentlicher Vorteil dieser Erfindung ist außerdem die Tatsache, dass das Produkt - die Biokohle - Parameter besitzen kann, die es sowohl als einen emeuerbaren Brennstoff für die Energetik und Fernheizung, als auch als ein Brennstoff für Kohle-Brennstoffzellen, als auch als natürlicher Dünger mit langjährigem Zerfall-Zyklus ohne Emission von C0₂ qualifizieren.

An den folgenden Beispielen soll die Anwendung des erfindungsgemäßen Verfahrens demonstriert werden:

### BEISPIEL I

### Karbonisierung von pflanzlichen Biomasse - technische Daten der erzeugten Produkte

### Beispiel a)

### Karbonisierung pflanzlicher Biomasse zur Herstellung eines festen Brennstoffes, von Biokohle, für energetische und Heizzwecke

Der Karbonisierungsprozess der pflanzlichen Biomasse beginnt mit der Stabilisierung der Temperatur bei 650°C. Dies wird durch die Verwirbelung der Flamme erreicht, die im Reaktor die pyrolytischen Gase vollständig verbrennt und die Temperatur der aus dem Reaktor entweichenden Abgase stabilisiert.
Zerkleinerte pflanzliche Biomasse (Körner kleiner als 40 mm) mit den Parametern:

| | |
|---|---|
| Feuchtigkeit | unter 40% |
| Asche | bis 2% |
| Heizwert | über 9,0 MJ/kg |

wird kontinuierlich mit einem Bandförderer in den Einfülltrichter der Trocknungsanlage für die Biomasse transportiert, die im Inneren des Abgaskühlers angeordnet ist. Die Verweildauer der pflanzlichen Biomasse in der Trocknungsanlage wird in Abhängigkeit von ihrem Feuchtigkeitsgehalt reguliert und beträgt bis zu 90 Sekunden. Nachdem die pflanzliche Biomasse mit der Temperatur bis 90°C die Trocknungsanlage verlassen hat, wird sie durch eine Einfüllkammer aus Metall zu den Förderschnecken der Reaktorretorten geleitet. Die getrocknete pflanzliche Biomasse unterliegt im Reaktor dem Thermolyse-Prozess bei einer Temperatur von über 650°C. Die Verweildauer im Reaktor beträgt durchschnittlich 3,5 Sekunden. Während der Thermolyse werden aus der pflanzlichen Biomasse leichte Kohlenwasserstoffe freigesetzt. Nach dem Durchgang durch den Reaktor wird der im Thermolyse-Prozess erzeugte Brennstoff mit einer Temperatur von unter 370°C in einen dichten Behälter für das heiße Produkt geleitet. Von hier gelangt es durch eine mit Wasser gekühlte Förderschnecke in den Kühler des Produktes. Der so erzeugte, bis zur Temperatur unter 40°C gekühlte Brennstoff, die Biokohle, wird aus Sicherheitsgründen mit CO₂ vollständig gelöscht, mit Wasser befeuchtet (auf vorzugsweise unter 10% Feuchtigkeit) und durch eine Fördereinrichtung zur Packvorrichtung der Biokohle transportiert, in der diese konfektioniert wird.

Durch Anwendung des erfindungsgemäßen Verfahrens wird aus der pflanzlichen Biomasse bei gleichzeitiger Energierückgewinnung aus den nachwachsenden Rohstoffen ein "grüner" Brennstoff, die Biokohle, mit folgenden Parametern hergestellt:

| | |
|---|---|
| absolute Feuchtigkeit | unter 10% |
| Aschegehalt | unter 6,0% |
| absoluter Kohlenstoffgehalt | über 70% |
| Schwefelgehalt | ca. 0,01% |
| Chlorgehalt | ca. 0,01% |
| Heizwert | über 24MJ/kg |

### Beispiel b)

### Karbonisierung pflanzlicher Biomasse zur Herstellung eines Brennstoffes für Kohle- Brennstoffzellen

Die Karbonisierung der aus harten Laubbäumen stammenden pflanzlichen Biomasse beginnt mit der Stabilisierung der Temperatur von 650°C. Dies wird durch die Verwirbelung der Flamme erreicht, die im Reaktor die pyrolytischen Gase vollständig verbrennt und die Temperatur der aus dem Reaktor entweichenden Abgase stabilisiert.

Die zerkleinerte pflanzliche Biomasse (Kömer kleiner als 20 mm) mit Parametern:

| | |
|---|---|
| Feuchtigkeit | unter 40% |
| Asche | bis 0,5% |
| Heizwert | über 10,0 MJ/kg |

wird kontinuierlich mit einem Bandförderer in den Einfülltrichter der Trocknungsanlage für die Biomasse transportiert, die im Inneren des Abgaskühlers angeordnet ist. Die Verweildauer der pflanzlichen Biomasse in der Trocknungsanlage wird auch in diesem Fall in Abhängigkeit von ihrem Feuchtigkeitsgehalt reguliert und beträgt bis zu 90 Sekunden. Nachdem die pflanzliche Biomasse mit der Temperatur von bis zu 90°C die Trocknungsanlage verlassen hat, wird sie durch eine Einfüllkammer aus Metall zu den Förderschnecken der Reaktorretorten transportiert. Die getrocknete pflanzliche Biomasse unterliegt im Reaktor dem Thermolyse-Prozess bei einer Temperatur von über 700°C. Die Verweildauer im Reaktor beträgt durchschnittlich 3,5 Sekunden. Während der Thermolyse werden aus der pflanzlichen Biomasse leichte Kohlenwasserstoffe freigesetzt. Nach dem Durchgang durch den Reaktor wird der im Thermolyse-Prozess erzeugte Brennstoff mit der Temperatur unter 370°C in einen dichten Behälter für das heiße Produkt geleitet. Von hier gelangt es durch eine mit Wasser gekühlte Förderschnecke in einen Kühler. Die erzeugte, bis zu einer Temperatur von weniger als 40°C gekühlte Biokohle wird aus Sicherheitsgründen mit CO₂ vollständig gelöscht und mit Wasser befeuchtet (vorzugsweise zu einem Feuchtigkeitsgehalt von weniger als 6%). Schließlich wird sie durch eine Fördereinrichtung zur Vorrichtung für das Verpacken der Biokohle transportiert.

Mit dem Verfahren wird bei gleichzeitiger Energierückgewinnung aus der pflanzlichen Biomasse ein Brennstoff für Kohle-Brennstoffzellen mit folgenden Parametern hergestellt:

| | |
|---|---|
| absolute Feuchtigkeit | unter 6% |
| - Aschegehalt - | unter 2,0% |
| absoluter Kohlenstoffgehalt | über 75% |
| Schwefelgehalt- | ca. 0,01% |
| Chlorgehalt - | ca. 0,01% |
| Heizwert | über 26MJ/kg |

### BEISPIEL II

### Verkohlung fester Biomasse

### Karbonisierung fester Biomasse, mit einem hohen Anteil von brennbaren Abfallstoffen

Der Karbonisierungsprozess der fester Biomasse, bestehend aus brennbaren Kunststoffen, Biomasse-Kommunalabfällen und pflanzlicher Biomasse beginnt mit der Stabilisierung der Temperatur von 850°C. Dies wird durch die Verwirbelung der Flamme erreicht, die im Reaktor die pyrolytischen Gase vollständig verbrennt und die Temperatur der aus dem Reaktor entweichenden Abgase stabilisiert.
Für die Karbonisierung wird die feste und gründlich gemischte Biomasse in zerkleinerter Form (Korngröße kleiner als 30 mm) mit folgenden Parametern eingesetzt:

| | |
|---|---|
| Feuchtigkeit | unter 40% |
| Kunststoffe | unter 3,5% |
| Biomasse-Kommunalabfälle | unter 35% |
| pflanzliche Biomasse | über 55% |

Die Abfall-Biomasse wird kontinuierlich mit einem Bandförderer in den Einfülltrichter der Trocknungsanlage gefördert, die im Inneren des Abgaskühlers angeordnet ist. Die Verweildauer der Abfall-Biomasse in der Trocknungsanlage wird in Abhängigkeit von ihrem Feuchtigkeitsgehalt reguliert und beträgt bis zu 90 Sekunden. Nachdem die Abfall-Biomasse mit der Temperatur von bis zu 90°C die Trocknungsanlage verlassen hat, wird sie durch eine Einfüllkammer aus Metall zu den Förderschnecken der Reaktorretorten transportiert. Die getrocknete Abfall-Biomasse unterliegt im Reaktor dem Thermolyse-Prozess bei einer Temperatur von mehr als 850°C. Die Verweildauer im Reaktor beträgt durchschnittlich 3,5 Sekunden. Während der Thermolyse werden aus der pflanzlichen Biomasse leichte Kohlenwasserstoffe sowie Schwefel- und Chloroxide freigesetzt. Nach dem Durchgang durch den Reaktor wird der im Thermolyse-Prozess erzeugte Brennstoff mit einer Temperatur von weniger als 370°C in einen dichten Behälter für das heiße Produkt geleitet. Von hier gelangt er durch eine mittels Wasser gekühlte Förderschnecke in den Kühler des Produktes. Der erzeugte, bis zur Temperatur von weniger als 40°C gekühlte Brennstoff wird aus Sicherheitsgründen mit CO₂ vollständig gelöscht und mit Wasser befeuchtet (vorzugsweise bis zu einem Feuchtigkeitsgehalt von weniger 6%) und durch ein Zubringersystem zum Behälter des Fertigprodukts transportiert.

Im Ergebnis des Verfahrens zur Energierückgewinnung wird aus festen Biomasse-Abfallbrennstoffen ein Brennstoff für Heizzwecke mit folgenden Parametern hergestellt:

| | |
|---|---|
| Feuchtigkeit | < 10% |
| Aschegehalt | < 25% |
| absoluter Kohlenstoffgehalt | > 65% |
| Schwefelgehalt | ca. 0,2% |
| Chlorgehalt | ca. 0,3% |
| Heizwert | > 21MJ/kg. |

Im Folgenden soll die Erfindung an Hand von Zeichnungen näher erläutert werden. Es zeigen:
- **Figur 1:**: die schematische Darstellung einer erfindungsgemäßen Anlage zur Energierückgewinnung mit integrierter Produktion von Biokohle,
- **Figur 2:**: die schematische Darstellung des technologischen Flusses des in der Anlage gemäß **Fig. 1** eingesetzten Wassers;
- **Figur 3:**: die schematische Darstellung des Flusses der in der Anlage gemäß **Fig. 1** eingesetzten Verbrennungsluft und der im Prozess entstehenden Abgase;
- **Figur 4:**: die schematische Darstellung der mit der Anlage gemäß **Fig. 1** erzielbaren Resultate;
- **Figur 5:**: die schematische Darstellung einer erfindungsgemäßen Anlage zur Energierückgewinnung mit integrierter Produktion eines natürlichen Düngers;
- **Figur 6:**: die schematische Darstellung des technologischen Flusses des in der Anlage gemäß **Fig. 5** eingesetzten Wassers;
- **Figur 7:**: die schematische Darstellung des Flusses der in der Anlage gemäß **Fig. 5** eingesetzten Verbrennungsluft und der im Prozess entstehenden Abgase;
- **Figur 8:**: die schematische Darstellung der mit der Anlage gemäß **Fig. 5** erzielbaren Resultate.

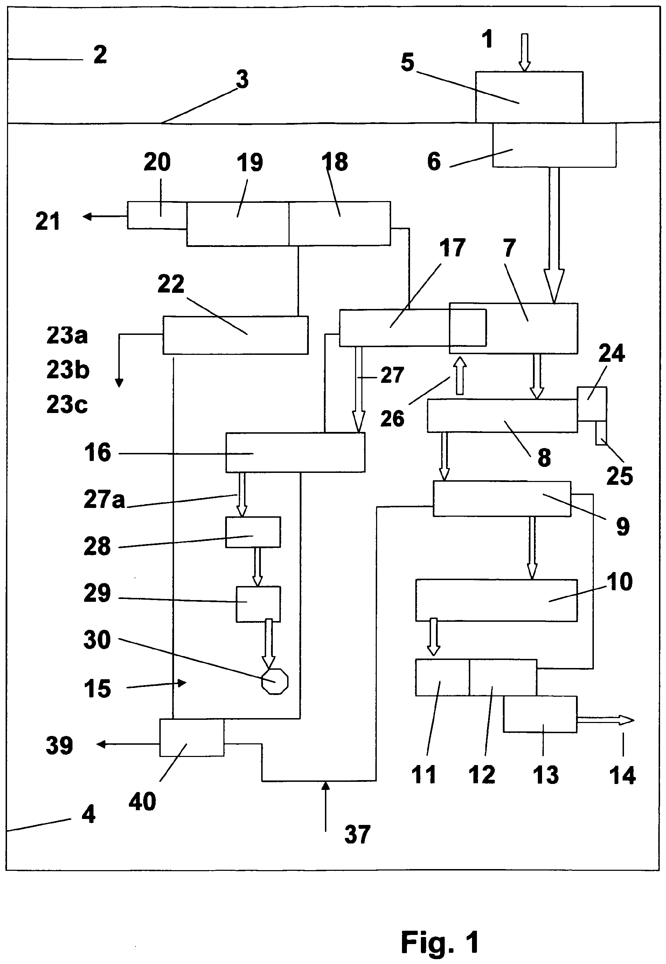

Aus dem Blockschema gemäß **Fig. 1** geht hervor, das die Anlage aus einer Halle 2 für die Biomasse und einer Maschinenhalle 4 besteht, die mittels einer Trennwand 3 miteinander verbunden sind und die zugleich für die Biomasse 1 eine Siebanlage 5 aufnimmt, die wiederum mit der Förderanlage 6 verbunden ist. An die Förderanlage 6 ist die Trocknungsanlage 7 angeschlossen, die im vorliegenden Beispiel als Drehtrockenanlage ausgeführt ist. Die Trocknungsanlage 7 ist mit dem Reaktor 8 fest verbunden. Unterhalb des Reaktors 8 ist der Kühler 9 für das fertige Reaktionsprodukt, die Biokohle 14, angeordnet. Zur Gewährleistung des technologischen Flusses schließen sich dem Kühler 9 die Fördervorrichtung 10 und an diese die CO₂- Löschvorrichtung 11 und die Befeuchtungsvorrichtung 12 sowie eine Packvorrichtung 13 für die Konfektionierung des abgekühlten Produktes 14, die Biokohle, an.

Zum Zweck der Energierückgewinnung ist die erfindungsgemäße Anlage mit einer im geschlossenen Umlaufsystem arbeitenden Produktionswasseranlage 15 ausgestattet. Diese Anlage umfasst den Wärmetauscher 16 Wasser/Abgase zur Kühlung/Wärmeübertragung der Abgase der Drehtrocknungsanlage 7. Der Wärmetauscher 16 ist mit dem Dampferzeuger 17 und dieser wiederum mit der Turbine 18 fest verbunden. Die Turbine 18 betreibt den StromGenerator 19. Die vom StromGenerator 19 erzeugte "grüne" elektrische Energie wird über die Anschlussstelle 20 in das Stromnetz 21 eingeleitet. Die Turbine 18 ist mit dem Austauscher 22 Kondensat/Wasser verbunden. Die auf diese Weise gewonnene "grüne" Wärmeenergie wird den Abnehmern 23 zur Verfügung gestellt und kann von diesen alternativ in das öffentliche Heizungsnetz 23a desjeweiligen Ortes eingespeist, zur Kälteerzeugung 23b und/oder mit dem Anschluss 23c zur Trocknung der zu verarbeitenden Biomasse 1 genutzt werden.

Das von dem Austauscher 22 kommende, teilweise abgekühlte Produktionswasser fließt durch den Austauscher 40 Wasser/Wasser und überträgt die vorhandene Wärmeenergie auf das über den Anschluss 37 zugeführte Rohwasser. Das so erwärmte Wasser kann über den Anschluss 39 für die sozialen Zwecke des Unternehmens, wie z.B. einen Warmwasserboiler und in der kälteren Jahreszeit für Heizzwecke genutzt werden kann. Das über den Anschluss 37 zugeführte Rohwasser wird zum Kühlen des fertigen Reaktionsproduktes, der Biomasse 14, im Austauscher 9, sowie anschließend zur Befeuchtung der Biomasse 14 in der Befeuchtungsvorrichtung 12 genutzt.

Zur erfindungsgemäßen Anlage gehören des Weiteren die mit dem Reaktor 8 fest verbundene Öl- oder Gasinstallation 24, mit deren Hilfe die Inbetriebnahme des technologischen Prozesses injiziert, ihm also der erste Anstoß gegeben wird. Zu diesem Zweck ist der Anschluss 24 mit dem Ventilator 25 für die Zufuhr der zum Aufheizen erforderlichen Verbrennungsluft für die Öl- oder Gasinstallation 24 verbunden. Der Reaktor 8 ist zur Weiterleitung seiner heißen Abgasgase mittels der Rohrleitung 26 mit der Drehtrocknungsanlage 7 und dem Dampferzeuger 17 verbunden, in dem die heißen Abgasgase durch die bei der Dampferzeugung verbrauchte Energie etwas abgekühlt werden. Der Dampferzeuger 17 ist mittels der Abgasleitung 27 mit dem Wärmetauscher 16 Abgase/Wasser fest verbunden. Von dort gelangen die abgekühlten Abgasgase durch das Rohrleitungssystem 27a zunächst zu der Filtereinrichtung 28, vorzugsweise einem Taschenfilter, danach zum Abgasventilator 29 und schließlich zum Schornstein 30 über den sie als gereinigte und abgekühlte Abgasgase in die freie Atmosphäre gelangen.

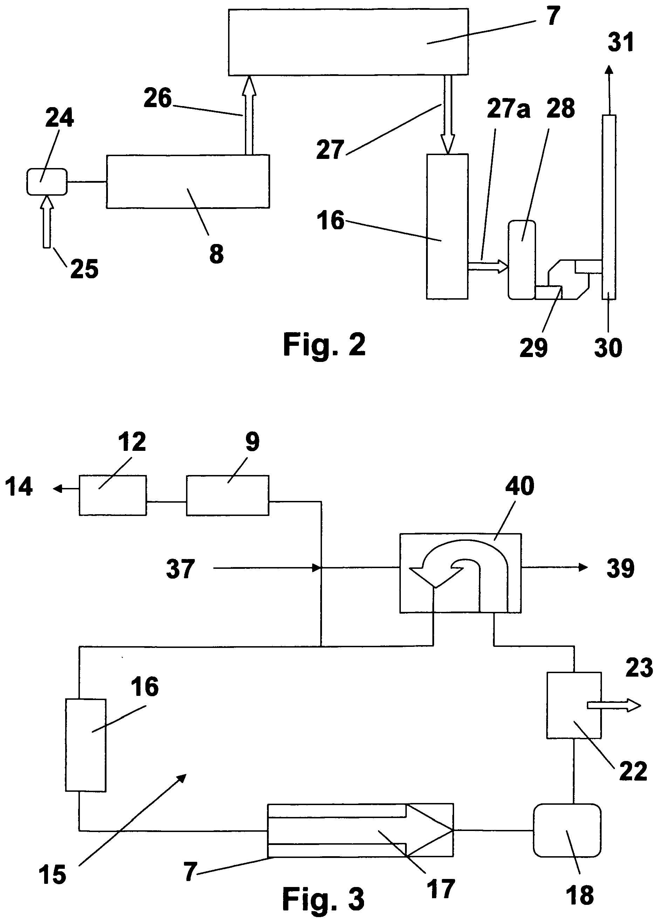

Die erfindungsgemäße Anlage zeichnet sich vor allem dadurch aus, dass der Prozess der Rückgewinnung der in der Biomasse 1 und den brennbaren Abfällen enthaltenen Energie als ein autothermischer Prozess gestaltet ist in dem die Biomasse 1 und die Abfälle sozusagen die eigenen Energieträger sind.
Nach dem Start des technologischen Prozesses durch Zündung des durch die Installation 24 zugeführten Öls oder Gases erfolgt eine automatische Zufuhr der Biomasse 1 oder der Abfälle aus der Biomasse-Halle 2 zur Siebanlage 5 und mittels der Förderanlage 6 zur Drehtrockenanlage 7 und danach zum Reaktor 8. Im Reaktor 8 vollzieht sich der Prozess der thermischen Aufwertung der Biomasse 1 gemäß dem im polnischen Patent PL 204 294 beschriebenen Verfahren. Unter der thermischen Aufwertung der Biomasse 1 wird sowohl die Karbonisierung der Biomasse 1 und deren Aufwertung zu einem festen "grünen" Brennstoff (vom Typ FLUID), der Biokohle 14, als auch die Rückgewinnung "grüner" Energie verstanden. Im Prozess der Karbonisierung entsteht übermäßige Wärmeenergie, die durch die heißen Abgasgase des Reaktors 8 zur Drehtrocknungsanlage 7 transportiert werden. Von dort umströmen sie den Dampferzeuger 17 und gelangen schließlich zum Wärmetauscher 16 Abgase/Wasser, in dem weitere Wärmeenergie auf das zum Dampferzeuger 17 strömende Wasser übertragen wird. Die bis zu einer Temperatur von <120°C abgekühlten Abgasgase strömen durch die Abgasleitung 27a zur Filtereinrichtung 28 und werden danach mittels des Abgasventilators 29 zum Schornstein 30 geleitet, durch den sie als gereinigte und abgekühlte Abgasgase 31 in die Atmosphäre freigesetzt werden. **Fig. 2** zeigt dazu den technologischen Fluss der in der erfindungsgemäßen Anlage eingesetzten Luft und der im Produktionsprozess sich bildenden Abgase, beginnend mit der durch das Gebläse 25 zugeführten Luft für die Öl- oder Gasinstallation 24 bis hin zum Verlassen der abgekühlten und gereinigten Abgasgase 31 durch den Schornstein 30.

**Fig. 3** zeigt das geschlossene Umlaufsystem 15 des für den Produktionsprozess zur Herstellung von Biokohle 14 erforderlichen Wassers und Dampfes und zwei offene Wassersysteme zum Einsatz des über den Anschluss 37 zugeführten Rohwassers einmal für die Kühlung und das Besprühen des Karbonisierungsproduktes und zum anderen für die Nutzung des erwärmten Speisewassers für wirtschaftlich/soziale Zwecke des Unternehmens über den Anschluss 39.

Das durch die heißen Abgasgase aus der hier eingesetzten Drehtrocknungsanlage 7 im Austauscher 16 bereits aufgeheizte Wasser wird im Verdampfer 17 durch die aus dem Reaktor 8 in die Drehtrocknungsanlage 7 strömenden sehr heißen Abgasgase verdampft und treibt die Turbine 18 an. Die Wärme des aus der Turbine 18 strömenden Kondensates wird im Austauscher 22 an entsprechende Abnehmer 23 übertragen. Im Austauscher 40 gibt das Produktionswasser noch vorhandene Wärmeenergie zur Nutzung für wirtschaftlich/soziale Zwecke des Unternehmens ab, bevor es im Austauscher 16 durch die heißen Abgasgase aus der Drehtrocknungsanlage 7 wieder erhitzt wird und der Kreislauf von vorn beginnt.
Soweit erforderlich, kann das Volumen des im geschlossenen System 15 zirkulierenden Produktionswassers durch die Zuführung von Rohwasser in die Rohrleitung zwischen dem Wärmetauscher 40 und dem Wärmetauscher 16 auf dem erforderlichen Niveau gehalten werden.

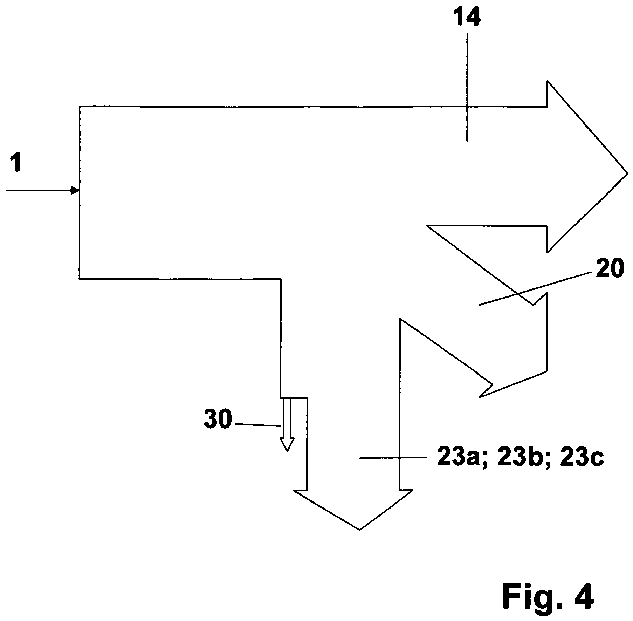

**Fig. 4** zeigt in schematischer Darstellung die durch die thermische Aufwertung der Biomasse 1 erzielbaren Resultate. Ziffer 20 stellt die Gewinnung der "grünen" Elektroenergie für das öffentliche Stromnetz dar, Ziffer 14 dokumentiert die Herstellung der "grünen" Biokohle und die Ziffern 23a, 23b und/oder 23 c stehen für die Gewinnung von "grüner" Wärmeenergie Heizungsnetz und/oder für Kühlzwecke 23b und/oder für Trocknungsprozesse, wie z.B. für die Trocknung der noch feuchten Biomasse.

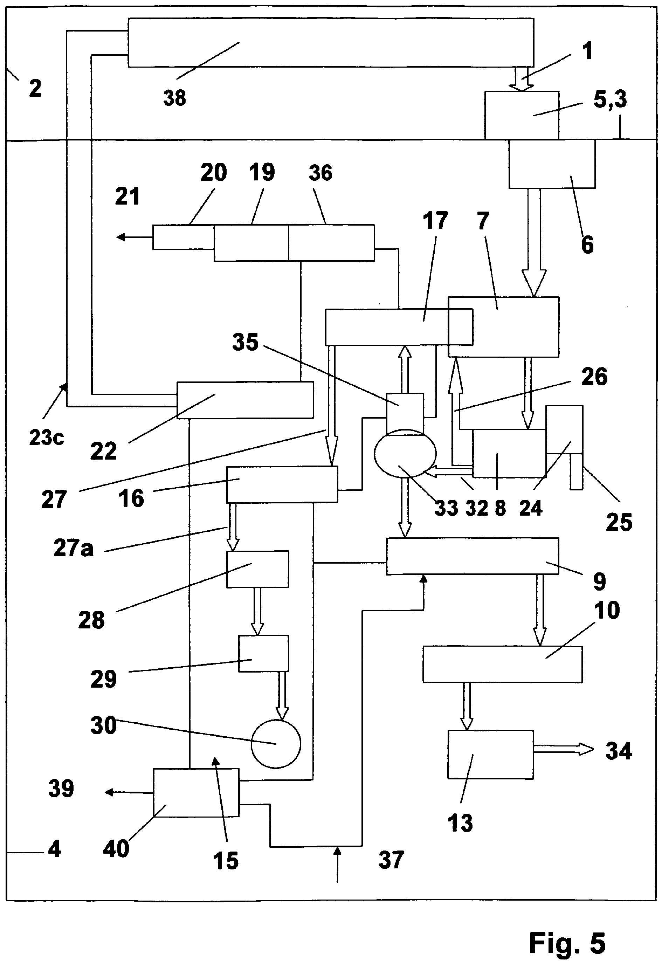

Das breite Anwendungsgebiet der Erfindung dokumentiert **Fig. 5****,** die das Schema einer Anlage für die Energierückgewinnung aus Biomasse 1 mit einem hohen Gehalt an Asche durch Karbonisierung mit integrierter Gewinnung eines natürlichen Düngers für landwirtschaftliche oder gärtnerische Zwecke zeigt.
Das vorliegende Ausführungsbeispiel der Erfindung bezieht sich insbesondere auf die Karbonisierung von Ablagerungen aus der Klärung kommunaler Abwässer, auf Abfallsubstrate aus Biogaswerken, auf Abfälle aus der industriellen Landwirtschaft, wie Fleisch-Knochen-Mehl, und auf Abfälle der Lebensmittelindustrie, überwiegend mit einer Granulation 0,1 mm bis 5 mm, einem Feuchtigkeitsgehalt < 95%, einem Aschegehalt > 15% und einem Heizwert > 6 MJ/kg.

Der Prozess der Karbonisierung mit anschließender Veraschung derartig aschehaltiger Biomasse 1 beginnt mit der Stabilisierung der Temperatur von 850°C, die zweckmäßigerweise durch eine Verwirbelung der Flamme der im Reaktor 8 verbrennenden pyrolytischen Gase erreicht und wodurch zugleich die Temperatur der aus dem Reaktor 8 entweichenden Abgasgase stabilisiert wird.
Im vorliegenden Ausführungsbeispiel wird die aschehaltige Biomasse 1 unter Einsatz der im Prozess gewonnenen Wärmeenergie 23c in einer in der Biomasse-Halle 2 vorgesehenen Trocknungsanlage 38, die vorzugsweise eine Anlage nach dem Wirbelschichtverfahren ist, vorgetrocknet.
Die Biomasse-Halle 2 ist mit der Trennwand 3 zur Maschinenhalle 4 und die Siebanlage 5 mit der Förderanlage 6 fest verbunden. An die Förderanlage 6 ist die Drehtrocknungsanlage 7 angeschlossen. Sie ist mit dem Reaktor 8 verbunden. Das im Reaktor 8 durch die Karbonisierung entstehende heiße Verkohlungsprodukt 14 wird mittels der fest mit dem Reaktor 8 verbundenen Förderschnecke 32 zur Veraschungsvorrichtung 33 und dann zum Kühler 9 des Karbonisierungsproduktes, der Asche, gefördert. Im Kühler 9 wird das heiße Veraschungsprodukt mittels des über den Anschluss 37 zugeführten Rohwassers abgekühlt. An den Kühler 9 ist die Förderanlage 10 angeordnet, mit der das gekühlte Produkt zur Packvorrichtung 13 gefördert wird, die es für den Versand konfektioniert. Die so gewonnene Asche kann in der Landwirtschaft als auch in Gärtnereien zur Bodenverbesserung und als natürlicher Dünger eingesetzt werden.

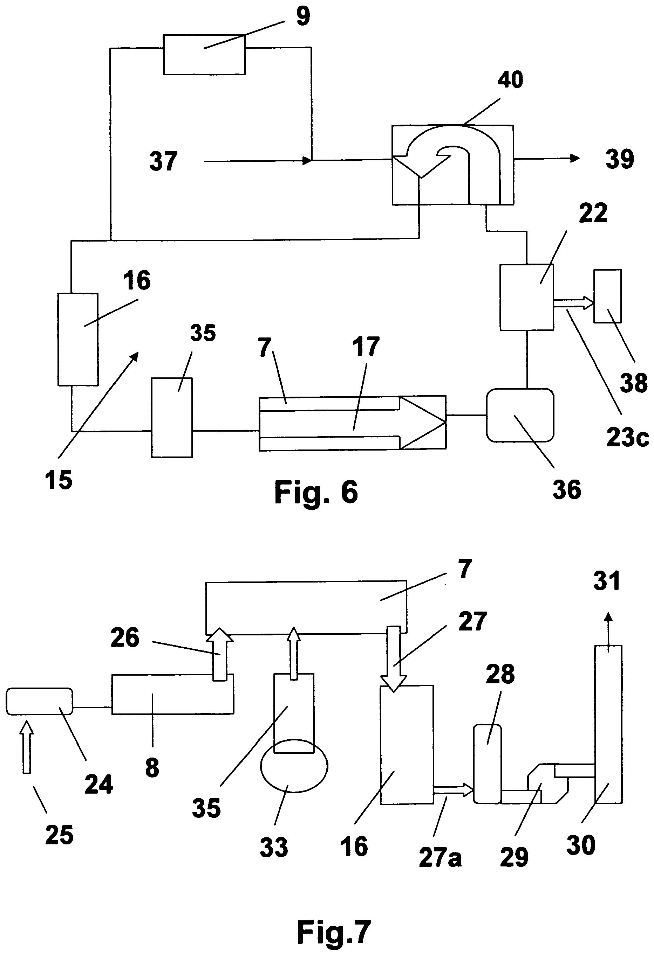

Zu dieser Ausführungsform einer erfindungsgemäßen Anlage zur Energierückgewinnung mit integrierter Düngergewinnung gehören, so wie in **Fig. 6** dargestellt, ebenfalls eine Produktionswasserinstallation 15, die im geschlossenen Umlaufsystem arbeitet, und zwei offene Wassersysteme für das über den Anschluss 37 zugeführte Rohwasser.
Bei dem ersten offenen System handelt es sich um einen Wärmeaustausch zum Erhitzen des mittels des Anschlusses 37 zugeführten Rohwassers im Austauscher 40 zur Nutzung für soziale Zwecke. Das andere offene System dient der Nutzung des zugeführten Rohwassers zum Kühlen des Produktes im Austauscher 9. Dieses System ist mit der Installation des Produktionswassers vor dem Eingang zum Austauscher 16 Wasser/Abgase verbunden.
Das Umlaufsystem des Produktionswassers umfasst den fest montierten Austauscher 16 Wasser/Abgase zur Übertragung der Wärme der aus der Drehtrocknungsanlage 7 strömenden noch heißen Abgase. Der Austauscher 16 ist fest mit dem Austauscher 35 und dieser mit dem Verdampfer 17 verbunden, dessen Hochdruckdampf den Turbogenerator 36 antreibt und der mit Einrichtungen 20 zur Einspeisung der "grünen" Elektroenergie in das Stromnetz 21 verbunden ist. Im Austauscher 35 wird das aus dem Austauscher 16 strömende heiße Wasser durch die bei der vollständigen Karbonisierung in der Veraschungsvorrichtung 33 entstehende Wärme noch weiter aufgeheizt. Der Turbogenerator 36 ist mit dem Austauscher 22 - Kondensat/Wasser - fest verbunden, der mittels des Anschlusses 23c an den Abnehmer der erneuerbaren Wärmeenergie, der Anlage 38 für die Vortrocknung der Abfallbiomasse 1, angeschlossen ist.

Bestandteil dieser Ausführungsform der erfindungsgemäßen Anlage ist ebenfalls eine mit dem Reaktor 8 fest verbundene Öl- oder Gasinstallation 24, die dem Technologieprozess die Initialzündung gibt. Die Installation 24 weist das Luftgebläse 25 auf. An den Reaktor 8 ist auch bei dieser Ausführungsform ein Kanal 26 für die Heißabgase montiert, die mittels dieses Kanals der Drehtrocknungsanlage 7 zugeführt werden. Die im Verdampfer 17 etwas abgekühlten aus dem Reaktor 8 strömenden Abgase gelangen durch die Abgasleitung 27 zum Austauscher 16 - Abgase/Wasser. Außerdem werden die Abgasgase aus der Veraschungsvorrichtung 33 und die aus dem Austauscher 35 ebenfalls zum Verdampfer 17 geleitet in dem sie diesem Wärmenergie zur Dampferzeugung abgeben. Danach werden sie zum Austauscher 16 - Abgase/Wasser geleitet Von hier aus gelangen sie abgekühlt durch das Abgasrohrsystem 27a nacheinander zur Filtereinrichtung 28, zum Abgasventilator 29 und schließlich zum Schornstein 30, den sie als gereinigte und abgekühlte Abgasgase verlassen.
Den technologischen Fluss des bei dieser Ausführungsform der Erfindung eingesetzten Luft und der im Prozess entstehenden Abgase zeigt **Fig. 7****.**

Auch dieser technologische Prozess der Energierückgewinnung mit integrierter Gewinnung von natürlichem Dünger zeichnet sich dadurch aus, dass die in diesem Prozess eingesetzte Biomasse 1 gleichzeitig der Träger des autothermischen Verfahrens der Energierückgewinnung ist.

Nach der Zündung des technologischen Prozesses mittels der Installation 24 und der Stabilisierung der erforderlichen Betriebstemperatur erfolgt eine automatische Zufuhr der Abfallbiomasse 1, von der Biomasse-Halle 2 zur Siebanlage 5, danach mittels der Fördereinrichtung 6 zur Drehtrockenanlage 7 und weiter zum Reaktor 8. Im Reaktor 8 vollzieht sich der Prozess der thermischen Aufwertung der Biomasse 1 gemäß der bekannten im polnischen Patent Nr. 203994 beschriebenen Erfindung. Im Reaktor 8 erfolgt die automatische Verkohlung der Biomasse 1 und es entsteht der feste erneuerbare Brennstoff 14, der in der Veraschungsvorrichtung 33 einer Vollverbrennung im Prozess der weiteren autothermischen Aufwertung der Biomasse unterliegt.

In diesem gesamten Prozess der autothermischen Aufwertung der aschehaltigen Biomasse 1 entsteht eine übermäßige Menge an Wärmeenergie in Form heißer Abgase. Die heißen Abgasgase aus dem Reaktor 8 gelangen zur Drehtrockenanlage 7, in der sie angereichert mit den aus dem Wärmetauscher 35 strömenden Abgasgase aus der Veraschungsvorrichtung 33 den Verdampfer 17 - Abgase/Dampf - umfließen und anschließend zum Austauscher 16 - Abgase/Wasser - geleitet werden. Die bis zu einer Temperatur von weniger als 120°C gekühlten Abgase gelangen durch die Abgaskanäle 27a zur Filtereinrichtung 28, hier ebenfalls ein Taschenfilter, und werden dann mittels des Abgasventilators 29 zum Schornstein 30.

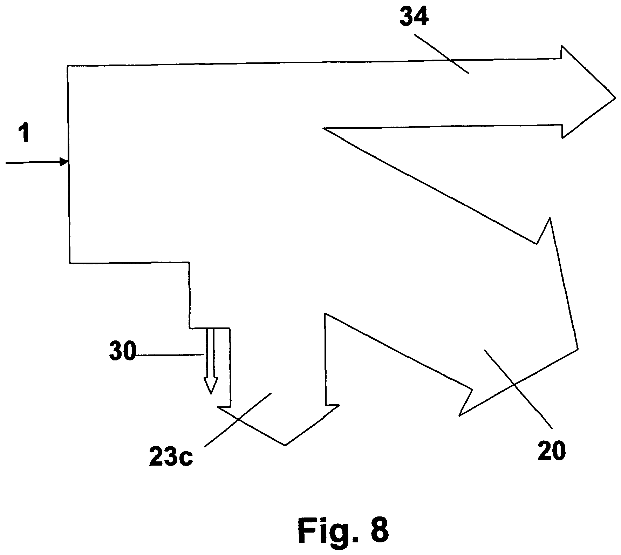

Aus **Fig. 8** ist ersichtlich, dass diese Ausführungsform der Erfindung sich durch die gleichzeitige Gewinnung "grüner" Elektroenergie 20, von "erneuerbarer" Wärmeenergie für die Trocknung feuchter Biomassen 23c sowie die Gewinnung von Asche 34 als natürlicher Dünger auszeichnet.
Durch die Veraschung von Biomasse-Ablagerungen aus der kommunalen Abwasserklärung, von Substraten der Biogaswerke sowie von Abfällen der Landwirtschaftsindustrie, wie Fleisch- und Knochenabfällen sowie Abfällen der Lebensmittelindustrie, wie Mehl, entsteht eine Asche mit folgenden Eigenschaften:
- hygroskopische Feuchtigkeit < 2,8%
- Kohlegehalt < 10%
- Magnesiumgehalt -
- Kaliumgehalt -
- Schwefelgehalt 0,1%
- Heizwert < 5 MJ/kg.

### Bezugszeichenaufstellung:

- 1: Biomasse/brennbare Abfälle
- 2: Biomasse-Halle
- 3: Trennwand
- 4: Maschinen-Halle
- 5: Trenn-, Zerkleinerungs- oder Siebvorrichtung
- 6: Förderanlage
- 7: Trocknungsanlage
- 8: Reaktor
- 9: Wärmetauscher/Kühler
- 10: Fördereinrichtung
- 11: Löschvorrichtung
- 12: Befeuchtungsvorrichtung
- 13: Packvorrichtung
- 14: Biokohle
- 15: Produktionswassersystem
- 16: Wärmetauscher
- 17: Verdampfer
- 18: Turbine
- 19: Generator
- 20: Anschlussstelle
- 21: Abnehmer
- 22: Wärmetauscher
- 23: Abnehmer
- 23a: Anschlussstelle öffentliches Heizungsnetz
- 23b: Anschlussstelle für Kühlzwecke
- 23c: Anschlussstelle für Trocknungszwecke
- 24: Gas- oder Ölinstallation
- 25: Gebläse
- 26: Abgasleitung
- 27: Abgasleitung
- 27a: Abgasrohrleitungssystem
- 28: Filtereinrichtung
- 29: Abgasventilator
- 30: Schornstein
- 31: Abgas
- 32: Förderschnecke
- 33: Veraschungsvorrichtung
- 34: Veraschungsprodukt
- 35: Wärmetauscher
- 36: Turbogenerator
- 37: Rohwasseranschluss
- 38: Trocknungsanlage
- 39: Anschlussstelle für Abnehmer
- 40: Wärmetauscher

## Patentansprüche

1. Anlage zur Energierückgewinnung aus Biomasse und brennbaren Abfallen und zur Karbonisierung dieser Stoffe umfassend eine Trenn-, Zerkleinerungs- und/oder Siebvorrichtung (5), die mit einer Förderanlage (6) zum Transport der Biomasse in eine Trocknungsanlage (7) verbunden ist, einem mit der Trocknungsanlage (7) verbundenen Reaktor (8), an dem eine Gas- oder Ölinstallation (24) mit einem Gebläse (25) angeordnet ist sowie Wärmetauscher und Einrichtungen zum Kühlen und Reinigen von Abgasgasen, **dadurch gekennzeichnet, dass**
a) der Reaktor (8) mit einem Kühler (9) verbunden ist, der das aus dem Reaktor (8) stammende Produkt der Karbonisierung aufnimmt und der mit einer Fördereinrichtung (10) verbunden ist, die das Karbonisierungsprodukt zu einer Löschvorrichtung (11), danach zu einer Befeuchtungsvorrichtung (12) und anschließend zu einer Packvorrichtung (13) transportiert, die das Produkt, eine Biokohle (14), konfektioniert
oder
b) der Reaktor (8) mit einer Fördereinrichtung (32) verbunden ist, die das durch die Karbonisierung im Reaktor (8) entstehende Verkohlungsprodukt zu einer Veraschungsvorrichtung (33) transportiert und die Veraschungsvorrichtung (33) mit einem Kühler (9) und dieser mit einer Fördereinrichtung (10) verbunden ist, die das Veraschungsprodukt zu einer Packeinrichtung (13) transportiert, die es in geeigneten Behältnissen konfektioniert,
und die Anlage zum Zweck der Energierückgewinnung
bei a) ein geschlossenes Produktionswasserumlaufsystem (15) aufweist, umfassend
- einen Wärmetauscher (16) zur Kühlung der mittels einer Rohrleitung (27) zugeführten heißen Abgasgase der Trocknungsanlage (7) und gleichzeitigen Wärmeübertragung auf das vom Wärmetauscher (16) zu einem Verdampfer (17) zugeführte Produktionswasser, wobei der Verdampfer (17) durch die über eine Rohrleitung (16) aus dem Reaktor (8) zugeführten heißen Abgasgase umströmt wird und mit einer Turbine (18) verbunden ist, die einen Generator (19) antreibt und eine Anschlussstelle (20) die erzeugte elektrische Energie Abnehmern (21) zur Verfügung stellt;
- einen Wärmetauscher (22) zur Übertragung der Wärme des aus der Turbine (18) zugeführten heißen Kondensates an das über ein offenes System zugeführte Wasser zur weiteren wirtschaftlichen Nutzung des erwärmten Wassers an Abnehmer (21);
- einen mit dem Wärmetauscher (16) verbundenen Wärmetauscher (40) zur Übertragung der Restwärme des aus dem Wärmetauscher (22) zugeführten Produktionswassers auf das über das offene System mit einem Anschluss (37) zugeführte Rohwasser, das aufgeheizt mittels eines Anschlusses (39) Abnehmern zur weiteren Nutzung zur Verfügung steht; und
bei **b)** ein geschlossenes Produktionswasserumlaufsystem (15) aufweist, umfassend
- einen Wärmetauscher (16) zur Kühlung der mittels einer Rohrleitung (27) zugeführten heißen Abgasgase der Trocknungsanlage (7) wobei dieser Wärmetauscher (16) mit einem Wärmetauscher (35) zur Übertragung der Wärme der in der Veraschungsvorrichtung (33) anfallenden heißen Abgasgase auf das vom Wärmetauscher (16) zum Wärmetauscher (35) zugeführte Produktionswasser und der Wärmetauscher (35) mit einem Verdampfer (17) verbunden ist, wobei der Verdampfer (17) von den mittels einer Rohrleitung (26) zugeführten heißen Abgasgase des Reaktors (8) umströmt und mit einer Turbine (18) verbunden ist, die einen Generator (19) antreibt und eine Anschlussstelle (20) die erzeugte elektrische Energie Abnehmern (21) zu Verfügung stellt;
- einen Wärmetauscher (22) zur Übertragung der Wärme des aus der Turbine (18) zugeführten heißen Kondensates an das über ein offenes System zugeführte Wasser zur weiteren wirtschaftlichen Nutzung des erwärmten Wassers an Abnehmer (21);
- den als Wärmetauscher fungierenden Kühler (9) zur Übertragung der Wärme des heißen Veraschungsproduktes auf das über einen Anschluss (37) zugeführte Rohwasser, wobei der Kühler (9) mit einer von einem Wärmetauscher (40) zum Wärmetauscher (16) geführten Rohrleitung vor deren Eingang zum Wärmetauscher (16) verbunden ist;
- den mit dem Wärmetauscher (16) verbundenen Wärmetauscher (40) zur Übertragung der Restwärme des aus dem Wärmetauscher (22) zugeführten Produktionswassers auf das über ein offenes System mit einem Anschluss (37) zugeführte Rohrwasser, das aufgeheizt mittels eines Anschlusses (39) Abnehmern zur weiteren Nutzung zur Verfügung steht.

2. Anlage nach Anspruch 1, **dadurch gekennzeichnet, dass** die Verbindung zwischen der Trocknungsanlage (7) und dem Reaktor (8) durch eine an der Trocknungsanlage (7) angeordnete vertikale Leitungsröhre hergestellt ist, die in ihrem unteren Teil eine Dosierkammer aufweist.

3. Anlage nach Anspruch 1 oder 2, **dadurch gekennzeichnet, dass** der Dampferzeuger (17) innerhalb der Trocknungsanlage (7) als Rohrverdampfer ausgebildet und schneckenförmig geformt ist.

4. Anlage nach einem der Ansprüche 1 bis 3, **dadurch gekennzeichnet, dass** an dem Wärmetauscher (22) einer Anschlussstelle (23a) für die Einspeisung der gewonnenen Wärmeenergie in das öffentliche Heizungsnetz, eine Anschlussstelle(23b) für Kühlzwecke und/oder eine Anschlussstelle (23c) für Trocknungszwecke vorgesehen sind.

5. Anlage nach einem der Ansprüche 1 bis 4, **dadurch gekennzeichnet, dass** der Wärmetauscher (22) mittels eines Anschlusses mit einer Trocknungsvorrichtung (38) verbunden ist, die Biomasse (1) unter Nutzung der im Wärmetauscher (22) anfallenden Wärmeenergie vortrocknet.

6. Anlage nach einem der Ansprüche 1 bis 5, **dadurch gekennzeichnet, dass** die Vorrichtungen und Einrichtungen der Anlage in einer jeweils kompakt ausgeführten Biomasse-Halle (2) und einer Maschinenhalle (4), die eine Trennwand (3) unmittelbar miteinander verbindet, angeordnet sind.

7. Anlage nach Anspruch 6, **dadurch gekennzeichnet, dass** die kompakte Ausführung der Anlage eine transportable Containerausführung ist.

8. Anlage nach einem der Ansprüche 5 bis 7, **dadurch gekennzeichnet, dass** die Biomasse (1) nachwachsende Rohstoffe, biologische Abfälle der Lebensmittelindustrie und der industriellen Verarbeitung von Obst und Gemüse, sortierte Kommunalabfälle, Ablagerungen von Abwasserkläranlagen, tierische Biomasse, Knochenmehl sowie alle anderen festen biologische Alternativ- und Abfallstoffe umfasst.

9. Verfahren zur Energierückgewinnung und Karbonisierung von Biomasse und brennbaren Abfällen, **dadurch gekennzeichnet, dass** die Biomasse und die Abfälle zerkleinert und getrocknet kontinuierlich einem aufgeheizten Reaktor zugeführt werden und in diesem nach Stabilisierung der für die Karbonisierung erforderlichen Temperatur und nach Stabilisierung der Temperatur der Abgasgase des Reaktors sauerstofffrei und autotherm verkohlt und die dabei entstehenden Abgasgase gekühlt und gereinigt werden und das heiße Verkohlungsprodukt entweder
a) gekühlt und nach einer aus Sicherheitsgründen erfolgten Behandlung mit CO₂ mit Wasser befeuchtet und schließlich in einer Packvorrichtung als Biokohle konfektioniert wird,
oder
b) einer Veraschungsvorrichtung zugeführt, in dieser vollständig verbrannt, die dabei entstehende Asche anschließend gekühlt und danach einer Packvorrichtung zugeführt wird, in der die Asche für Düngerzwecke oder zum Zweck der Bodenverbesserung für Abnehmer konfektioniert wird,
und zum Zweck der Energierückgewinnung
bei a)
- die heißen Abgasgase aus dem Reaktor zur Trocknung der für die Karbonisierung vorgesehenen und zerkleinerten Biomasse und Abfälle im Gegenstrom genutzt und danach durch eine Wärmetauscher geführt werden und in diesem das in einem geschlossenen Produktionswasserumlaufsystem zugeführte Wasser weiter erhitzen, dieses einem Dampferzeuger zugeführt wird und in diesem durch die heißen Abgasgase des Reaktors in Hockdruckdampf umgewandelt wird, mit dem zur Erzeugung elektrischer Energie eine Turbine eines Generators angetrieben und die erzeugte elektrische Energie Abnehmern bereitgestellt wird,
- die Wärmeenergie des aus der Turbine strömenden heißen Kondensates mittels eines Wärmetauschers auf das über ein externes System zugeführte Wasser übertragen und Abnehmern für Heiz-, Trocknungs- und Kühlzwecke zur Verfügung gestellt wird und
- die Restwärme des aus dem letztgenannten Wärmetauscher strömenden Produktionswassers durch einen weiteren Wärmetauscher auf zugeführtes Rohwasser übertragen und dem Unternehmen, in dem die erfindungsgemäße Anlage installiert ist, für soziale Zwecke zur Verfügung gestellt wird;
und bei b)
- die heißen Abgasgase aus dem Reaktor zur Trocknung der für die Karbonisierung vorgesehenen und zerkleinerten Biomasse und Abfälle im Gegenstrom genutzt und danach durch den Wärmetauscher (16) geführt werden und in diesem das in einem geschlossenen Produktionswasserumlaufsystem zugeführte Wasser weiter erhitzt wird bevor es in einem weiteren Wärmetauscher die Wärmeenergie der aus einer Veraschungsvorrichtung strömenden heißen Abgasgase aufnimmt und das so erhitzte Produktionswasser einem Dampferzeuger zugeführt und in diesem durch die heißen Abgasgase des Reaktors in Hockdruckdampf umgewandelt wird, mit eine Turbine eines Generators angetrieben und die so erzeugte elektrische Energie Abnehmern bereitgestellt wird;
- die Wärmeenergie des aus der Turbine strömenden heißen Kondensates mittels eines Wärmetauschers auf das über ein externes System zugeführte Wasser übertragen und Abnehmern für Heiz-, Trocknungs- und Kühlzwecke zur Verfügung gestellt wird und
- die Restwärme des aus letzterem Wärmetauscher strömenden Produktionswassers durch einen weiteren Wärmetauscher auf zugeführtes Rohwasser übertragen und dem Unternehmen, in dem die erfindungsgemäße Anlage installiert ist, für soziale Zwecke zur Verfügung gestellt wird.

10. Verfahren nach Anspruch 9, **dadurch gekennzeichnet, dass** die Biomasse und die brennbaren Abfälle auf eine bis zu 15 mm x 15 mm x 40 mm zerkleinert werden.

11. Verfahren nach Anspruch 9 oder 10, **dadurch gekennzeichnet, dass** die autotherme Karbonisierung in Abhängigkeit von der Art der Biomasse und der brannbaren Abfälle bei Stabilisierung der Temperatur im Reaktor und die der Abgasgase zwischen 650° C und 850°C eingeleitet wird.

12. Verfahren nach einem der Ansprüche 9 bis 11, **dadurch gekennzeichnet, dass** die getrocknete Biomasse und die Abfälle mit einer Temperatur zwischen 80°C und 100°C in den Reaktor eingebracht werden.

13. Verfahren nach den Ansprüchen 9 bis 12, **dadurch gekennzeichnet, dass** die Biomasse und die Abfälle bei einer Verweildauer in einer Trocknungsanlage von 0,5 Minuten bis 3 Minuten getrocknet werden.

14. Verfahren nach einem der Ansprüche 9 bis 13, **dadurch gekennzeichnet, dass** die Biomasse und die Abfälle bei einer Verweildauer von durchschnittlich 3,4 Sekunden im Reaktor karbonisiert werden.

15. Verfahren nach einem der Ansprüche 9 bis 14, **dadurch gekennzeichnet, dass** das Karbonisierungsprodukt bis auf eine Temperatur <40°C abgekühlt wird.

## Claims

1. Plant for recovering energy from biomass and combustible wastes and for carbonizing these materials, which comprises a separation, comminution and/or sieving apparatus (5) which is connected to a conveying facility (6) for transporting the biomass into a drying plant (7), a reactor (8) which is connected to the drying plant (7) and on which a gas or oil installation (24) with a blower (25) is arranged and also heat exchangers and facilities for cooling and purifying exhaust gases, **characterized in that**
a) the reactor (8) is connected to a cooler (9) which takes up the product of carbonization originating from the reactor (8) and is connected to a conveying facility (10) which transports the carbonization product to a quenching apparatus (11), then to a moistening apparatus (12) and subsequently to a packing apparatus (13) which packs the product, namely a biocoal (14),
or
b) the reactor (8) is connected to a conveying facility (32) which transports the carbonization product formed by carbonization in the reactor (8) to an ashing apparatus (33) and the ashing apparatus (33) is connected to a cooler (9) and this is connected to a conveying facility (10) which transports the ashing product to a packing facility (13) which packs it in suitable containers,
and the plant has, for the purposes of energy recovery,
in the case of **a)** a closed production water circulation system (15) comprising
- a heat exchanger (16) for cooling the hot exhaust gases from the drying plant (7) supplied by means of a pipe (27) and simultaneously transferring heat to the production water supplied from the heat exchanger (16) to a vaporizer (17), where the hot exhaust gases supplied from the reactor (8) via a pipe (16) flow around the vaporizer (17) and the vaporizer (17) is connected to a turbine (18) which drives a generator (19) and provides a connecting point (20) to the consumers (21) of the electric energy generated;
- a heat exchanger (22) for transferring the heat of the hot condensate supplied from the turbine (18) to the water supplied via a public system for further economic utilization of the heated water at consumers (21);
- a heat exchanger (40) which is connected to the heat exchanger (16) for the purpose of transferring the residual heat of the production water supplied from the heat exchanger (22) to the raw water supplied via the public system with a connection (37), which raw water in heated form is available by means of a connection (39) to consumers for further utilization;
and
in the case of **b)** has a closed production water circulation system (15) comprising
- a heat exchanger (16) for cooling the hot exhaust gases from the drying plant (7) supplied by means of a pipe (27), where this heat exchanger (16) is connected to a heat exchanger (35) for transferring the heat of the hot exhaust gases arising in the ashing apparatus (33) to the production water supplied from the heat exchanger (16) to the heat exchanger (35) and the heat exchanger (35) is connected to a vaporizer (17), where the hot exhaust gases from the reactor (8) supplied by means of a pipe (26) flow around the vaporizer (17) and the vaporizer (17) is connected to a turbine (18) which drives a generator (19) and provides a connecting point (20) to the consumers (21) of the electric energy generated;
- a heat exchanger (22) for transferring the heat of the hot condensate supplied from the turbine (18) to the water supplied via a public system for further economic utilization of the heated water at consumers (21);
- the cooler (9) functioning as heat exchanger for transferring the heat of the hot ashing product to the raw water supplied via a connection (37), where the cooler (19) is connected to a pipe leading from a heat exchanger (40) to the heat exchanger (16) upstream of the inlet thereof into the heat exchanger (16);
- the heat exchanger (40) which is connected to the heat exchanger (16) for the purpose of transferring the residual heat of the production water supplied from the heat exchanger (22) to the mains water supplied via a public system with a connection (37), which mains water in heated form is available by means of a connection (39) to consumers for further utilization.

2. Plant according to Claim 1, **characterized in that** the connection between the drying plant (7) and the reactor (8) is provided by a vertical conduit which is arranged on the drying plant (7) and has a metering chamber in its lower part.

3. Plant according to Claim 1 or 2, **characterized in that** the steam generator (17) is located within the drying plant (7) and is configured as tube vaporizer and has a helical shape.

4. Plant according to any of Claims 1 to 3, **characterized in that** a connecting point (23a) for introduction of the heat energy recovered into the public heating network, a connecting point (23b) for cooling purposes and/or a connecting point (23c) for drying purposes are provided on the heat exchanger (22).

5. Plant according to any of Claims 1 to 4, **characterized in that** the heat exchanger (22) is connected by means of a connection to a drying apparatus (38) which predries the biomass (1) utilizing the heat energy obtained in the heat exchanger (22).

6. Plant according to any of Claims 1 to 5, **characterized in that** the apparatuses and facilities of the plant are arranged in an in each case compactly constructed biomass hall (2) and a machine hall (4) which are directly joined to one another by a dividing wall (3).

7. Plant according to Claim 6, **characterized in that** the compact construction of the plant is a transportable container construction.

8. Plant according to any of Claims 5 to 7, **characterized in that** the biomass (1) comprises renewable raw materials, biological wastes from the foodstuffs industry and the industrial processing of fruit and vegetables, sorted municipal wastes, deposits from wastewater treatment plants, animal biomass, bone meal and any other solid biological alternative materials and waste materials.

9. Process for recovering energy from and carbonizing biomass and combustible wastes, **characterized in that** the biomass and the wastes are, in comminuted and drying form, continuously fed to a heated reactor and in this are, after stabilization of the temperature required for carbonization and after stabilization of the temperature of the exhaust gases from the reactor, carbonized in the absence of oxygen and autothermally and the exhaust gases arising therefrom are cooled and purified and the hot carbonization product is either
a) cooled and, after a treatment with CO₂ carried out for safety reasons, moistened with water and finally packed as biocoal in a packing apparatus,
or
b) fed to an ashing apparatus, burnt completely in the latter, the ash formed is subsequently cooled and then fed to a packing apparatus in which the ash is packed for consumers for fertilizing purposes or for the purpose of soil improvement,
and, for the purpose of energy recovery,
in the case of **a)**
- the hot exhaust gases from the reactor are utilized for drying the comminuted biomass and wastes provided for carbonization in countercurrent and then conveyed through a heat exchanger and in this heats the water supplied in a closed production water circulation system further, this water is fed to a steam generator and in this converted by means of the hot exhaust gases from the reactor into high-pressure steam, with which a turbine of a generator is driven in order to generate electric energy and the electric energy generated is made available to consumers,
- the heat energy of the hot condensate flowing from the turbine is transferred by means of a heat exchanger to the water supplied via an external system and made available to consumers for heating, drying and cooling purposes and
- the residual heat of the production water flowing from the latter heat exchanger is transferred by means of a further heat exchanger to raw water supplied and made available for social purposes to the enterprise in which the plant according to the invention is installed;
and in the case of **b)**
- the hot exhaust gases from the reactor are utilized for drying the comminuted biomass and wastes provided for carbonization in countercurrent and then conveyed through the heat exchanger (16) and in this the water supplied in a closed production water circulation system is further heated before it takes up the heat energy of the hot exhaust gases flowing from an ashing apparatus in a further heat exchanger and the production water which has been heated in this way is fed to a steam generator and in this converted by means of the hot exhaust gases from the reactor into high-pressure steam, driven with a turbine of a generator, and the electric energy generated in this way is made available to consumers;
- the heat energy of the hot condensate flowing from the turbine is transferred by means of a heat exchanger to the water supplied via an external system and made available to consumers for heating, drying and cooling purposes and
- residual heat of the production water flowing from the latter heat exchanger is transferred by means of a further heat exchanger to raw water supplied and made available for social purposes to the enterprise in which the plant according to the invention is installed.

10. Process according to Claim 9, **characterized in that** the biomass and the combustible wastes are comminuted to a of up to 15 mm × 15 mm × 40 mm.

11. Process according to Claim 9 or 10, **characterized in that** the autothermal carbonization is, depending on the type of biomass and the combustible wastes, commenced with stabilization of the temperature in the reactor and that of the exhaust gases in the range from 650°C to 850°C.

12. Process according to any of Claims 9 to 11, **characterized in that** the dried biomass and the wastes are introduced with a temperature in the range from 80°C to 100°C into the reactor.

13. Process according to any of Claims 9 to 12, **characterized in that** the biomass and the wastes are dried in a drying plant for a residence time of from 0.5 minute to 3 minutes.

14. Process according to any of Claims 9 to 13, **characterized in that** the biomass and the wastes are carbonized in the reactor for a residence time of an average of 3.4 seconds.

15. Process according to any of Claims 9 to 14, **characterized in that** the carbonization product is cooled to a temperature of < 40°C.

## Revendications

1. Installation pour la récupération d'énergie à partir d'une biomasse et de déchets combustibles et pour la carbonisation de ces substances, comprenant un dispositif de séparation, broyage et/ou tamisage (5) relié à une installation de transport (6) pour le transport de la biomasse dans une installation de séchage (7), un réacteur (8) relié à l'installation de séchage (7), au niveau duquel une installation de gaz ou de mazout (24) avec une soufflante (25) est disposée, ainsi que des échangeurs de chaleur et dispositifs pour refroidir et nettoyer des gaz d'échappement,
**caractérisée en ce que**
a) le réacteur (8) est relié à un refroidisseur (9) qui recueille le produit de la carbonisation provenant du réacteur (8) et qui est relié à un dispositif de transport (10) qui transporte le produit de carbonisation vers un dispositif d'extinction (11), ensuite vers un dispositif d'humidification (12), et finalement vers un dispositif de conditionnement (13) qui conditionne le produit, un biocharbon (14),
ou
b) le réacteur (8) est relié à un dispositif de transport (32) qui transporte le produit de carbonisation produit par la carbonisation dans le réacteur (8) vers un dispositif d'incinération (33), et le dispositif d'incinération (33) est relié à un refroidisseur (9), et celui-ci à un dispositif de transport (10) qui transporte le produit d'incinération vers un dispositif de conditionnement (13) qui le conditionne dans des contenants adéquats,
et l'installation présente, pour les besoins de la récupération d'énergie,
en a) un système de circulation d'eau de production (15) fermé, comprenant
- un échangeur de chaleur (16) pour refroidir les gaz d'échappement chauds, amenés au moyen d'une conduite (27), de l'installation de séchage (7), et le transfert de chaleur simultané à l'eau de production amenée de l'échangeur de chaleur (16) vers un évaporateur (17), l'évaporateur (17) étant entouré par le flux des gaz d'échappement chauds amenés via une conduite (16) hors du réacteur (8) et est relié à une turbine (18), laquelle entraîne un générateur (19), et un point de connexion (20) qui met à disposition de consommateurs (21) l'énergie électrique produite ;
- un échangeur de chaleur (22) pour transmettre la chaleur du condensat chaud amené hors de la turbine (18) à l'eau amenée via un système ouvert pour l'exploitation économique ultérieure de l'eau chauffée au consommateur (21) ;
- un échangeur de chaleur (40) relié à l'échangeur de chaleur (16) pour la transmission de la chaleur résiduelle de l'eau de production amenée hors de l'échangeur de chaleur (22) à l'eau brute amenée via le système ouvert avec un raccordement (37), laquelle est à disposition de manière chauffée au moyen d'un raccordement (39) pour des consommateurs pour une utilisation ultérieure ;
et
en b) un système de circulation d'eau de production (15) fermé, comprenant
- un échangeur de chaleur (16) pour refroidir les gaz d'échappement chauds, amenés au moyen d'une conduite (27), de l'installation de séchage (7), dans laquelle cet échangeur de chaleur (16) est relié à un échangeur de chaleur (35) pour la transmission de la chaleur des gaz d'échappement chauds produits dans le dispositif d'incinération (33) à l'eau de production amenée de l'échangeur de chaleur (16) vers l'échangeur de chaleur (35), et l'échangeur de chaleur (35) est relié à un évaporateur (17), l'évaporateur (17) étant entouré par le flux des gaz d'échappement chauds, amenés au moyen d'une conduite (26), du réacteur (8) et est relié à une turbine (18), laquelle entraîne un générateur (19), et un point de connexion (20) qui met à disposition de consommateurs (21) l'énergie électrique produite ;
- un échangeur de chaleur (22) pour la transmission de la chaleur du condensat chaud amené hors de la turbine (18) à l'eau amenée via un système ouvert pour l'exploitation économique ultérieure de l'eau chauffée au consommateur (21) ;
- le refroidisseur (9) faisant office d'échangeur de chaleur pour la transmission de la chaleur du produit d'incinération chaud à l'eau brute amenée via un raccordement (37), le refroidisseur (9) est relié à une conduite, menant d'un échangeur de chaleur (40) vers l'échangeur de chaleur (16), devant l'entrée de celle-ci dans l'échangeur de chaleur (16) ;
- l'échangeur de chaleur (40) relié à l'échangeur de chaleur (16) pour la transmission de la chaleur résiduelle de l'eau de production amenée hors de l'échangeur de chaleur (22) à l'eau brute amenée via un système ouvert avec un raccordement (37), laquelle est disponible pour des consommateurs de manière chauffée au moyen d'un raccordement (39) pour une utilisation ultérieure.

2. Installation selon la revendication 1, **caractérisée en ce que** la liaison entre l'installation de séchage (7) et le réacteur (8) est établie grâce à un conduit vertical disposé au niveau de l'installation de séchage (7), lequel présente une chambre de dosage dans sa partie inférieure.

3. Installation selon la revendication 1 ou 2, **caractérisée en ce que** le générateur de vapeur (17) est réalisé en tant qu'évaporateur tubulaire à l'intérieur de l'installation de chauffage (7) et est formé de manière hélicoïdale.

4. Installation selon l'une des revendications 1 à 3, **caractérisée en ce que** l'on prévoit, au niveau de l'échangeur de chaleur (22), un point de raccordement (23a) pour alimenter le réseau de chauffage public avec l'énergie thermique obtenue, un point de raccordement (23b) pour des besoins de refroidissement et/ou un point de raccordement (23c) pour des besoins de séchage.

5. Installation selon l'une des revendications 1 à 4, **caractérisée en ce que** l'échangeur de chaleur (22) est relié au moyen d'un raccordement à un dispositif de séchage (38), lequel assure le pré-séchage de la biomasse (1) en utilisant l'énergie thermique produite dans l'échangeur de chaleur (22).

6. Installation selon l'une des revendications 1 à 5, **caractérisée en ce que** les dispositifs et équipements de l'installation sont disposés dans un hall à biomasse (2) et dans un hall des machines (4) respectivement réalisés de manière compacte, lesquels sont directement reliés ensemble par une cloison (3).

7. Installation selon la revendication 6, **caractérisée en ce que** la réalisation compacte de l'installation est une réalisation transportable de conteneur.

8. Installation selon l'une des revendications 5 à 7, **caractérisée en ce que** la biomasse (1) comprend des matières premières renouvelables, des déchets biologiques de l'industrie alimentaire et de la transformation industrielle de fruits et légumes, des déchets municipaux triés, des dépôts de stations d'épuration, de la biomasse animale, de la poudre d'os ainsi que toutes les autres matières biologiques solides alternatives et de rebut.

9. Procédé pour la récupération d'énergie et la carbonisation de biomasse et de déchets combustibles, **caractérisé en ce que** la biomasse et les déchets sont amenés en continu de manière broyée et séchée à un réacteur chauffé et, après la stabilisation de la température nécessaire pour la carbonisation et après la stabilisation de la température des gaz d'échappement du réacteur, sont soumis à houillification dans celui-ci, sans oxygène et de façon autothermique, et les gaz d'échappement ainsi produits sont refroidis et nettoyés et le produit de houillification chaud est soit
a) refroidi et, après un traitement avec du CO₂ ayant eu lieu pour des raisons de sécurité, est humecté avec de l'eau et est finalement conditionné dans un dispositif de conditionnement en tant que biocharbon,
soit
b) amené à un dispositif d'incinération, est complètement brûlé dans celui-ci, la cendre ainsi formée est ensuite refroidie et est ensuite amenée à un dispositif de conditionnement dans lequel la cendre est conditionnée pour des besoins de fertilisation ou des besoins d'amélioration des sols pour des consommateurs,
et pour les besoins de la récupération d'énergie
en a)
- les gaz d'échappement chauds issus du réacteur sont utilisés à contre-courant pour le séchage de la biomasse et des déchets broyés prévus pour la carbonisation et sont ensuite guidés à travers un échangeur de chaleur et, dans celui-ci, continuent de chauffer l'eau guidée dans un système de circulation d'eau de production fermé, celle-ci étant amenée à un générateur de vapeur et étant transformée dans celui-ci en vapeur sous haute pression, par les gaz d'échappement chauds du réacteur, avec laquelle une turbine d'un générateur est entraînée pour la génération d'énergie électrique, et l'énergie électrique générée est mise à disposition de consommateurs,
- l'énergie thermique du condensat chaud s'écoulant hors de la turbine est transmise au moyen d'un échangeur de chaleur à l'eau amenée via un système externe et est mise à disposition de consommateurs pour des besoins de chauffage, de séchage et de refroidissement, et
- la chaleur résiduelle de l'eau de production s'écoulant hors de l'échangeur de chaleur cité en dernier est transmise par un autre échangeur de chaleur à de l'eau brute amenée et mise à disposition de l'entreprise dans laquelle l'installation selon l'invention est installée pour des besoins sociaux ;
et en b)
- les gaz d'échappement chauds issus du réacteur pour le séchage de la biomasse et des déchets broyés prévus pour la carbonisation sont utilisés à contre-courant et sont ensuite guidés à travers l'échangeur de chaleur (16) et, dans celui-ci, l'eau amenée dans un système de circulation d'eau de production fermé continue d'être chauffée avant qu'elle n'absorbe, dans un autre échangeur de chaleur, l'énergie thermique des gaz d'échappement chauds s'écoulant hors d'un dispositif d'incinération, et l'eau de production ainsi chauffée est amenée à un générateur de vapeur et est transformée dans celui-ci en vapeur sous haute pression, par les gaz d'échappement chauds du réacteur, avec une turbine d'un générateur est entraînée et l'énergie électrique ainsi générée est mise à disposition de consommateurs ;
- l'énergie thermique du condensat chaud s'écoulant hors de la turbine est transmise au moyen d'un échangeur de chaleur à l'eau amenée via un système externe et est mise à disposition de consommateurs pour des besoins de chauffage, de séchage et de refroidissement, et
- la chaleur résiduelle de l'eau de production s'écoulant hors de ce dernier échangeur de chaleur est transmise par un autre échangeur de chaleur à de l'eau brute amenée et est mise à disposition de l'entreprise dans laquelle l'installation selon l'invention est installée pour des besoins sociaux.

10. Procédé selon la revendication 9, **caractérisé en ce que** la biomasse et les déchets combustibles sont broyés à un jusqu'à 15 mm x 15 mm x 40 mm.

11. Procédé selon la revendication 9 ou 10, **caractérisé en ce que** la carbonisation autothermique est initiée en fonction du type de la biomasse et des déchets combustibles avec stabilisation de la température dans le réacteur et celle des gaz d'échappement entre 650 °C et 850 °C.

12. Procédé selon l'une des revendications 9 à 11, **caractérisé en ce que** la biomasse séchée et les déchets sont introduits dans le réacteur avec une température comprise entre 80 °C et 100 °C.

13. Procédé selon les revendications 9 à 12, **caractérisé en ce que** la biomasse et les déchets sont séchés dans une installation de séchage avec durée de séjour de 0,5 minutes à 3 minutes.

14. Procédé selon l'une des revendications 9 à 13, **caractérisé en ce que** la biomasse et les déchets sont carbonisés dans le réacteur avec une durée de séjour de 3,4 secondes en moyenne dans le réacteur.

15. Procédé selon l'une des revendications 9 à 14, **caractérisé en ce que** le produit de carbonisation est refroidi jusqu'à une température < 40 °C.
